# EUROPEAN PATENT SPECIFICATION

(11) **EP 4 395 383 B1**
(45) Date of publication and mention of the grant of the patent: **08.10.2025**
(21) Application number: 22902887.3
(22) Date of filing: 22.08.2022
(51) Int. Cl.: H04W 4/80, H04W 76/14, H04W 84/18, H04W 8/00, H04W 76/15

(54) **CONNECTION METHOD AND APPARATUS**
VERBINDUNGSVERFAHREN UND -VORRICHTUNG
PROCÉDÉ ET APPAREIL DE CONNEXION

(30) Priority: 07.12.2021 CN 202111482462
(43) Date of publication of application: 03.07.2024
(73) Proprietor: Honor Device Co., Ltd., Shenzhen, Guangdong 518040 (CN)
(72) Inventor: NIU, Yongmin, Shenzhen, Guangdong 518040 (CN); ZHANG, Yashu, Shenzhen, Guangdong 518040 (CN)
(74) Representative: Gill Jennings & Every LLP
(86) International application number: PCT/CN2022/113821
(87) International publication number: WO 2023/103454

(56) References cited:
- CN-A- 112 640 506
- CN-A- 112 995 963
- CN-A- 113 228 722
- CN-A- 113 242 539
- CN-A- 113 411 794
- CN-A- 113 923 641
- KR-B1- 101 543 161
- US-A1- 2011 136 434
- US-A1- 2017 156 166
- US-A1- 2023 164 560
- US-A1- 2024 023 175
- US-B1- 9 301 087

## Description

This application claims priority to Chinese Patent Application No. 202111482462.8, filed with the China National Intellectual Property Administration on December 7, 2021 and entitled "CONNECTION METHOD AND APPARATUS".

### TECHNICAL FIELD

This application relates to the computer field, and in particular, to a connection method and an apparatus.

### BACKGROUND

With development of Bluetooth wireless transmission technologies, there are more polices for establishing a connection between a terminal and a Bluetooth device. The terminal may have a plurality of different connection policies for Bluetooth devices of a same type but different models.

For example, for Bluetooth keyboards, the terminal may have different connection policies for a keyboard A and a keyboard B of different models. For example, the terminal may have a conventional Bluetooth connection and a coil adsorption connection policy for the keyboard A, and may further support a proximity discovery connection for the keyboard B. Each time a Bluetooth device supporting different connection logic is added on a terminal side, a series of timing problems need to be considered, for example, a disconnection cannot be implemented or a reconnection cannot be implemented. Therefore, to implement compatibility with different connection logic of different Bluetooth devices, a large amount of code logic needs to be added, resulting in a problem such as a heavy code workload.

CN112640506A1 discloses a Bluetooth node pairing method and a related apparatus. CN113228722A discloses a pairing method and apparatus. US2017/156166A1 discloses a method and an apparatus for connecting with a controlled smart device.

### SUMMARY

The invention is defined in the appended claims.

### BRIEF DESCRIPTION OF DRAWINGS

FIG. 1 is a schematic diagram of obtaining identification information of a keyboard A by a tablet in a connection manner of scanning a broadcast packet according to an embodiment of this application;
FIG. 2 is a schematic diagram of obtaining identification information of a keyboard A by a tablet in a coil adsorption connection manner according to an embodiment of this application;
FIG. 3 is a schematic diagram of a Bluetooth architecture on a terminal side according to an embodiment of this application;
FIG. 4 is a schematic diagram of a scenario in which a user enables and disables Bluetooth on a tablet side after a connection is established between a keyboard and a tablet in a coil adsorption connection manner according to an embodiment of this application;
FIG. 5 is a schematic diagram of a timeline for a thread in which an adsorption status is modified to adsorbed in a scenario in which a Bluetooth state of a tablet is switched from off to on and for parallel execution of a thread in which it is determined whether a condition for performing a second BLE scan is met according to an embodiment of this application;
FIG. 6 is a schematic diagram of a connection method on a tablet side in a scenario in which a terminal discovers a same Bluetooth keyboard in a short time in two connection manners according to an embodiment of this application;
FIG. 7 is a schematic diagram of a scenario in which a connection method provided in this application is implemented according to an embodiment of this application;
FIG. 8 is a schematic diagram of sending an updated configuration file to a terminal by a cloud according to an embodiment of this application;
FIG. 9 is a schematic flowchart of a connection method according to an embodiment of this application;
FIG. 10 is a schematic diagram of a connection method in multi-terminal interaction according to an embodiment of this application;
FIG. 11 is a schematic diagram of a Bluetooth connection method on a tablet side in a multi-device scenario according to an embodiment of this application;
FIG. 12 is a schematic diagram of a connection method for a first BLE scan initiated by a host to a controller according to an embodiment of this application;
FIG. 13 is a schematic diagram of another connection method for a first BLE scan initiated by a host to a controller according to an embodiment of this application;
FIG. 14 is a schematic diagram of a connection method for a second BLE scan actively initiated by a controller according to an embodiment of this application;
FIG. 15 is a schematic diagram of a connection method for a second BLE scan actively initiated by a controller according to an embodiment of this application;
FIG. 16 is a schematic diagram of another connection method for a second BLE scan actively initiated by a controller according to an embodiment of this application;
FIG. 17 is a schematic diagram of another connection method for a second BLE scan actively initiated by a controller according to an embodiment of this application;
FIG. 18A and FIG. 18B are schematic flowcharts of a connection method according to an embodiment of this application;
FIG. 19 is a schematic diagram of a hardware structure of a terminal 200 according to an embodiment of this application; and
FIG. 20 is a block diagram of a software structure of a terminal 100 according to an embodiment of this application.

### DESCRIPTION OF EMBODIMENTS

To make the objectives, technical solutions, and advantages of this application clearer, the following further describes this application with reference to the accompanying drawings.

The terms "first", "second", and the like in the specification, claims, and accompanying drawings of this application are merely used to distinguish between different objects, but are not used to describe a specific sequence. In addition, the terms "include" and "have" and any variations thereof are intended to cover non-exclusive inclusion. For example, a process, method, system, product, or device that includes a series of steps or units is not limited to the listed steps or units, but optionally further includes an unlisted step or unit, or optionally further includes another step or unit inherent to the process, method, product, or device.

An "embodiment" in this specification means that a specific feature, structure, or characteristic described with reference to the embodiment may be included in at least one embodiment of this application. The term appearing at various positions in the specification does not necessarily refer to a same embodiment, or an independent or alternative embodiment mutually exclusive with another embodiment. Persons skilled in the art may explicitly and implicitly understand that the embodiments described in this specification may be combined with other embodiments.

In this application, "at least one" means one or more, "a plurality of" means two or more, "at least two" means two, three, or more, and "and/or" is used to describe an association relationship between associated objects, and indicates that three relationships may exist. For example, "A and/or B" may indicate the following three cases: Only A exists, only B exists, and both A and B exist, where A and B may be singular or plural. The character "/" usually indicates an "or" relationship between associated objects. "At least one of the following items (pieces)" or a similar expression thereof means any combination of these items. For example, at least one of a, b, or c may represent a, b, c, "a and b", "a and c", "b and c", or "a, b, and c".

In the embodiments of this application, a Bluetooth device may be any electronic device that has a Bluetooth connection function, for example, a keyboard, a mouse, a stylus, or an electronic band. A terminal may be any electronic device that has a Bluetooth connection function, and includes an electronic device that has a Bluetooth function, for example, a mobile terminal, a tablet computer, a desktop computer, a laptop computer, a handheld computer, a notebook computer, and an ultra-mobile personal computer (ultra-mobile personal computer, UMPC).

It may be understood that Bluetooth communication means communication between two Bluetooth modules or Bluetooth devices. One of two parties that perform data communication is a primary device, and the other is a secondary device. The primary device is a device that scans or receives a data packet and initiates a connection call request. The secondary device is a device that publishes a data packet. It may be understood that the data packet carries identification information (which may alternatively be understood as device information) of the Bluetooth device. In the embodiments of this application, the identification information includes a Bluetooth address and a device model identifier (model id). The identification information may further include other information such as a random address of the Bluetooth device or a name of the Bluetooth device. This is not limited in this specification.

In the embodiments of this application, the device model identifier in the identification information of the Bluetooth device is used to indicate a device model of the Bluetooth device, and the Bluetooth address in the identification information of the Bluetooth device is used to uniquely identify the Bluetooth device. It may be understood that the Bluetooth address is a unique identifier of the Bluetooth device. Addresses of all Bluetooth devices are inconsistent, so that the Bluetooth address may be used to uniquely identify one Bluetooth device. A data volume of the Bluetooth address is usually 6 bytes, or may be another appropriate size. This is not limited in the embodiments of this application. Descriptions of the identification information of the Bluetooth device in this specification are consistent with this.

For ease of description, in this specification, a Bluetooth electronic device working in a secondary device mode is referred to as a Bluetooth device, and a Bluetooth electronic device working in a primary device mode is referred to as a terminal.

In the embodiments of this application, considering that a current mainstream Bluetooth technology is usually a Bluetooth wireless technology of Bluetooth low energy (bluetooh low energy, BLE), an implementation of the connection method provided in this application is described in detail by using the BLE wireless technology as an example of the Bluetooth technology in the embodiments of this application. However, the connection method provided in the embodiments of this application is not only applicable to the BLE Bluetooth wireless technology, but also applicable to a conventional Bluetooth technology or another Bluetooth technology. This is not limited in this application.

It may be understood that BLE is developed on a basis of a Bluetooth technology, is the same as Bluetooth, but is different from conventional Bluetooth. BLE is a short-range wireless communication technology with extremely low power consumption, and is often applied to a product with a relatively high requirement for real-time performance but a relatively low data rate, for example, a keyboard or a remote control mouse.

In the BLE Bluetooth technology, a Bluetooth device may publish a BLE broadcast packet (which may alternatively be understood as a data packet described above) (the BLE broadcast packet is referred to as a broadcast packet for short below) through a BLE broadcast channel. The broadcast packet includes identification information of the Bluetooth device. In the BLE Bluetooth technology, a terminal may obtain, in a BLE scan manner, the broadcast packet published by the Bluetooth device, to obtain the identification information of the Bluetooth device, and choose to establish a Bluetooth connection to the required Bluetooth device.

It may be understood that all Bluetooth devices described below are Bluetooth devices of a same type, for example, are Bluetooth keyboards or Bluetooth styluses.

For ease of understanding, the following first describes related terms and related concepts in the embodiments of this application.

(1) Connection manner of scanning a broadcast packet and coil adsorption connection manner

In the description of this specification, a Bluetooth connection manner may also be referred to as a connection manner for short. That is, the connection manner and the Bluetooth connection manner are different expressions of a same concept in this specification.

In the embodiments of this application, the connection manner is a manner in which a terminal and a Bluetooth device discover each other and establish a connection, and is specifically a connection manner in which the terminal obtains (which may alternatively be understood as "receives") identification information of the Bluetooth device and establishes a connection to the Bluetooth device.

In the embodiments of this application, the terminal may discover the Bluetooth device in the following connection manner, and obtain the identification information of the Bluetooth device:
1. The terminal obtains the identification information of the Bluetooth device in the connection manner of scanning a broadcast packet.

That is, the terminal working in a primary device mode may scan, by using a BLE scan technology in a Bluetooth transmission range, a broadcast packet published by the surrounding Bluetooth device, obtain the identification information of the Bluetooth device, and select the Bluetooth device that needs to be connected for connection.

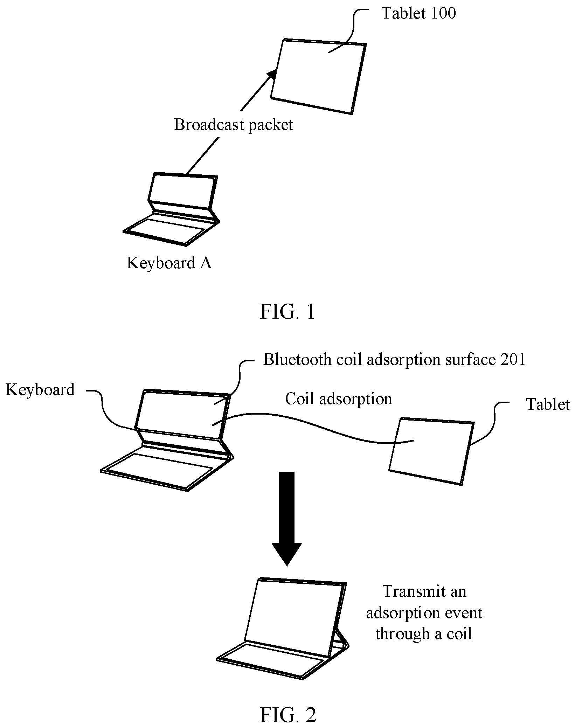

For example, as shown in FIG. 1, a keyboard A publishes a broadcast packet in a BLE broadcast manner, and the terminal obtains identification information of the keyboard A in a manner of scanning the broadcast packet.

Usually, that the terminal establishes a Bluetooth connection to the Bluetooth device in the manner of scanning a broadcast packet may include a connection manner that is conventionally set, a proximity discovery connection manner, and a background reconnection.

The connection manner that is conventionally set means that after the terminal detects that a user opens a page of a Bluetooth application, the terminal performs a BLE scan, and discovers a Bluetooth device in a communication range of the terminal in the manner of scanning a broadcast packet. The Bluetooth device may be a matching Bluetooth device of a same manufacturer as the terminal, or may be a third-party Bluetooth device.

The proximity discovery connection manner is a manner in which the terminal and a Bluetooth device (for example, a matching primary device and secondary device of a same manufacturer) supported by the terminal complete pairing and connection in the connection manner of scanning a broadcast packet. Specifically, when a Bluetooth function of the terminal is in an enabled state, the terminal determines to perform a BEL scan. A private identifier (for example, a model identifier) of the Bluetooth device supported by the terminal is added to a scan filter of the BLE scan. In a Bluetooth communication range between the terminal and the Bluetooth device, after obtaining, through scanning, a broadcast packet that includes the private identifier, the scan filter in the terminal starts to process a pairing and connection program with the Bluetooth device (it may be understood that the terminal may discover the Bluetooth device in the manner of scanning a broadcast packet, then pop up a pairing and connection confirmation box, and then establish a Bluetooth connection after receiving an instruction for determining to perform pairing and connection from a user). It may be understood that a determining condition for determining to perform the BLE scan may further include more other conditions than the condition in which the Bluetooth function of the terminal is in the enabled state. For example, the determining condition may further include a condition in which the terminal is in a screen-on state and/or the terminal does not establish a Bluetooth connection to a Bluetooth device of a corresponding type. For example, when the terminal supports only one device for Bluetooth devices of a same model, the determining condition may not include the condition in which the terminal does not establish a Bluetooth connection to a Bluetooth device of a corresponding type; or when the terminal supports a plurality of connections for Bluetooth devices of a same model, the determining condition may not include the condition in which the terminal does not establish a Bluetooth connection to a Bluetooth device of a corresponding type.

The background reconnection means that when a Bluetooth function of the terminal is in an enabled state, and a quantity of Bluetooth devices included in a whitelist is not 0, the terminal determines to perform a BLE scan, and it is set in a Bluetooth filter of the BLE scan that only a broadcast packet of the Bluetooth device in the whitelist is scanned. The whitelist stores identification information of a device that is paired with and connected to the terminal.

It may be learned from the foregoing description that the BLE scan in the connection manner that is conventionally set, the BLE scan in the proximity discovery, and the BLE scan in the background reconnection are different Bluetooth scans. Specifically, scan parameters are inconsistent, and scan objects are inconsistent. In the embodiments of this application, in the connection manner that is conventionally set, provided that the user taps a Bluetooth device discovered on the page of the Bluetooth application, a connection request is usually immediately initiated to the Bluetooth device, and a processing program for establishing a connection to the device is executed. Therefore, in the embodiments of this application, a priority may not be set for the connection manner that is conventionally set. The terminal is immediately connected to a Bluetooth device provided that the user determines, in the connection manner that is conventionally set, to be connected to the Bluetooth device, and does not determine a priority or wait for a preset duration. It may be understood that based on a requirement, a priority may alternatively be set for the connection manner that is conventionally set. This is not limited in the embodiments of this application.

For ease of description, in this specification, the background reconnection and the proximity discovery connection manner are collectively referred to as the connection manner of scanning a broadcast packet. That is, the connection manner of scanning a broadcast packet is used to refer to the background reconnection, or may be used to refer to the proximity discovery connection manner. Specifically, in a pairing procedure, the connection manner of scanning a broadcast packet is used to refer to the proximity discovery connection manner. In a reconnection procedure, the connection manner of scanning a broadcast packet is used to refer to the connection manner of background reconnection.

2. The terminal obtains the identification information of the Bluetooth device in the coil adsorption connection manner.

In the embodiments of this application, in a coil adsorption connection, when a magnet part of the Bluetooth device is adsorbed to a magnet part of the terminal, a magnetic sensor on a terminal side may detect an adsorption event. After detecting the adsorption event, the terminal may obtain the identification information of the Bluetooth device through coil communication (which may alternatively be understood as a communication manner of a wireless charging qi protocol), to simplify a Bluetooth connection procedure.

In the embodiments of this application, when the adsorption event does not include the identification information of the Bluetooth device, after detecting the adsorption event, the terminal may obtain the identification information of the Bluetooth device through coil communication.

In the embodiments of this application, the adsorption event may alternatively include the identification information of the Bluetooth device. That is, the coil adsorption connection manner may be specifically as follows: The Bluetooth device sends the adsorption event to the terminal. The adsorption event includes the identification information of the Bluetooth device. After detecting the adsorption event, the terminal parses the adsorption event to obtain the identification information of the Bluetooth device.

For ease of description, the manner of obtaining the identification information of the Bluetooth device through coil communication or the manner of obtaining the identification information of the Bluetooth device by using the adsorption event that includes the identification information of the Bluetooth device are collectively referred to as the coil adsorption connection manner below.

For example, as shown in FIG. 2, in a scenario in which a Bluetooth connection is established between a tablet and a Bluetooth keyboard, an internal coil of the tablet (for example, a position of the internal coil of the tablet is a back of the tablet) is attached and adsorbed to an internal coil of the Bluetooth keyboard, and an internal magnet part of the tablet (for example, a position of an internal magnet of the tablet is the back of the tablet) is attached and adsorbed to an internal magnet part of the Bluetooth keyboard (for example, a position of an internal magnet of the keyboard is a part supporting the back of the tablet, and is shown as a Bluetooth coil adsorption surface 201 in FIG. 2). After the tablet detects an adsorption event by using a magnetic sensor, the internal coil of the tablet and the internal coil of the Bluetooth keyboard transmit identification information of the Bluetooth keyboard through coil communication, so that the tablet obtains the identification information of the Bluetooth keyboard. Alternatively, the adsorption event may include the identification information of the Bluetooth keyboard. After detecting the adsorption event, the tablet parses the adsorption event to obtain the identification information of the Bluetooth keyboard.

It may be understood that after the terminal obtains the identification information of the Bluetooth device in the connection manner of scanning a broadcast packet, if a connection to the Bluetooth device needs to be established, a series of interaction steps, for example, exchange of key information, need to be further performed through a broadcast channel. When a Bluetooth connection to the Bluetooth device is established in the coil adsorption connection manner, some information about the Bluetooth device, for example, one or more pieces of information such as a Bluetooth address, a model identifier, a Bluetooth device name, key information, a random address, or a device capability, may be obtained through coil communication. Therefore, a series of interaction steps that need to be performed through the broadcast channel in a process of establishing, by the terminal, a Bluetooth connection to the Bluetooth device are simpler. That is, the coil adsorption connection manner and the connection manner of scanning a broadcast packet are two different Bluetooth connection manners.

It may be understood that the connection manner of scanning a broadcast packet has a constraint of a time window. The terminal possibly can obtain, through scanning, a broadcast packet published by the Bluetooth device, only when a scan window of a BLE scan performed by the terminal overlaps a broadcast window of BLE broadcast performed by the Bluetooth device. However, in the coil adsorption connection manner, after detecting an adsorption action, the terminal and the Bluetooth device may transmit the identification information by using a communication protocol. Therefore, compared with the connection manner of scanning a broadcast packet, the coil adsorption connection manner has a shorter obtaining time (the obtaining time described in this specification refers to a duration in which the terminal starts to obtain identification information of a same Bluetooth device at a same time and successfully obtains the identification information of the Bluetooth device).

It may be understood that, that there may be the coil adsorption connection manner and the connection manner of scanning a broadcast packet for the connection manner is merely used as an example. The terminal may further discover the Bluetooth device in more or fewer connection manners than the coil adsorption connection manner and the connection manner of scanning a broadcast packet, obtain the identification information of the Bluetooth device, and be connected to the Bluetooth device. For example, the terminal may further obtain the identification information of the Bluetooth device in a near field communication (Near Field Communication, NFC) connection manner. This is not limited in this specification.

### (2) Pairing and connection, background reconnection, and coil reconnection

In the embodiments of this application, the pairing and connection is pairing and connection performed between a terminal and a Bluetooth device for the first time. Usually, when the terminal is paired with and connected to the Bluetooth device for the first time, after a terminal side obtains identification information of the Bluetooth device, and before a connection request is initiated to the Bluetooth device, a pairing box that includes some identification information (for example, a device model identifier or other identification information, for example, a device name) of the Bluetooth device pops up on the terminal side. The terminal initiates a Bluetooth connection to the Bluetooth device after receiving, by using the pairing box, a confirmation instruction that is used for confirming a connection and that is sent by a user.

It may be understood that in another possible implementation, when the terminal is paired with and connected to the Bluetooth device for the first time, after obtaining a data packet that includes identification information of the Bluetooth device, the terminal side may not pop up a window, and does not provide a user with an entry for determining whether to establish a connection, but directly establishes a connection. This is not limited in this specification.

In the embodiments of this application, when the terminal is paired with the Bluetooth device for the first time, the terminal obtains some information about the Bluetooth device, for example, key information or a device capability (for example, a communication band supported by the Bluetooth device) of the Bluetooth device. After the terminal is paired with the Bluetooth device for the first time, the terminal stores related information of the Bluetooth device. When the Bluetooth device and the terminal are reconnected again, some interaction steps may be omitted. Usually, after the terminal is paired with and connected to the Bluetooth device for the first time, the terminal adds the identification information of the Bluetooth device to a whitelist, and stores the related information of the Bluetooth device. After obtaining a device in the whitelist through scanning next time, the terminal may directly initiate a connection request to quickly establish a connection. It may be understood that the adding the identification information of the Bluetooth device to a whitelist specifically includes: adding a Bluetooth address of the Bluetooth device to the whitelist. It may be understood that other identification information of the Bluetooth device may be further added to the whitelist. This is not limited in this specification. For example, identification information such as the device name or the device model identifier of the Bluetooth device may be further added to the whitelist. It may be understood that the whitelist may also be referred to as another term (for example, a pairing list). This is not limited in this specification. Descriptions of the whitelist in the embodiments of this specification are consistent with this.

In the embodiments of this application, a reconnection means that the terminal establishes a Bluetooth connection to a paired Bluetooth device. The paired Bluetooth device is a Bluetooth device that is paired with and connected to the terminal.

In the embodiments of this application, in the pairing and connection between the terminal and the Bluetooth device, the identification information of the Bluetooth device may be obtained in the foregoing proximity discovery connection manner, the connection manner that is conventionally set, and the coil adsorption connection manner. In the reconnection between the terminal and the Bluetooth device, the identification information of the Bluetooth device may be obtained in the foregoing connection manner of background reconnection and the coil adsorption connection manner.

For ease of description, in this specification, a BLE scan (which may alternatively be understood as a Bluetooth scan) in which the identification information of the Bluetooth device is obtained in the proximity discovery connection manner in the pairing and connection is referred to as a first BLE scan, and a BLE scan in which the identification information of the Bluetooth device is obtained by using a BLE scan in the background reconnection in the reconnection is referred to as a second BLE scan.

Usually, when determining that a Bluetooth function of the terminal is in an enabled state and a screen of the terminal is in an on state, the terminal starts to perform the first BLE scan. It may be understood that the description herein that the terminal starts to perform the first BLE scan under a condition in which it is determined that the Bluetooth function of the terminal is in the enabled state, the screen of the terminal is in the on state, and the terminal does not establish a connection to any Bluetooth device of a corresponding type is merely an example. That the terminal starts to perform the first BLE scan may further include more or fewer other conditions than the condition in which the screen is in the on state. This is not limited in this specification.

In the embodiments of this application, the reconnection includes the background reconnection and the coil reconnection. A manner in which the Bluetooth device is reconnected after the identification information of the Bluetooth device is obtained in the coil adsorption connection manner is a coil reconnection manner.

In the background reconnection, the terminal may set a filter to scan only a broadcast packet from a Bluetooth device in the whitelist, and when the Bluetooth function of the terminal is in the enabled state (which may alternatively include another condition in which the Bluetooth function of the terminal is in the enabled state, for example, a quantity of Bluetooth devices included in the whitelist is not 0 and/or a condition in which the terminal does not establish a Bluetooth connection to any Bluetooth device of a corresponding type), the terminal may perform the second BLE scan, scan the Bluetooth device in the whitelist, and initiate a connection when a broadcast packet obtained through scanning is from the Bluetooth device in the whitelist.

It may be understood that the first BLE scan in the pairing and connection (which is specifically the proximity discovery connection manner) and the second BLE scan in the reconnection (which is specifically the background reconnection) are two different BLE scans. Identification information obtained in the first BLE scan may be included in the whitelist, or may not be included in the whitelist. However, a whitelist device is set in a Bluetooth scan filter corresponding to the second BLE scan, so that all identification information obtained in the second BLE scan is included in the whitelist. Usually, the terminal may perform only the first BLE or only the second BLE scan within a same time. For example, when the screen of the terminal is in the on state, a Bluetooth state of the terminal is in an enabled state, and the terminal does not establish a Bluetooth connection to any Bluetooth device, the terminal performs the first BLE scan, and does not perform the second BLE scan. When the screen of the terminal is in an off state, the terminal performs the second BLE scan, and does not perform the first BLE scan. This is not limited in this specification.

The following explains and describes, with reference to the foregoing terms, a Bluetooth architecture on a terminal side provided in an embodiment of this application.

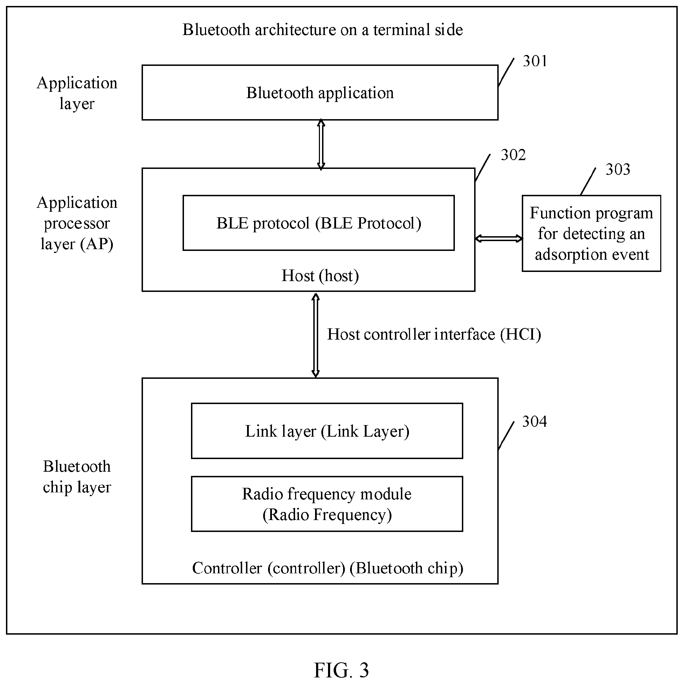

As shown in FIG. 3, the Bluetooth architecture on the terminal side includes an application layer, an application processor layer, and a Bluetooth chip layer.

The application layer includes a Bluetooth application 301. The Bluetooth application may be configured to receive an instruction of a user, for example, receive a touch operation, a tap operation, or a touch and hold operation of the user.

The application processor layer includes a host (host) 302 and a function program 303 for detecting an adsorption event.

In this embodiment of this application, the host stores a BLE protocol used to perform communication by using BLE. It may be understood that the host is a core part of a Bluetooth protocol stack, may be responsible for determining a working role of a device (for example, a role of a primary device or a secondary device), specifies a secure connection, is responsible for multiplexing of a protocol or channel, and is responsible for segmentation and/or reassembly of upper-layer application data, to meet a delay requirement for user data transmission, and facilitate implementation of a mechanism such as subsequent retransmission and flow control.

In this embodiment of this application, a communication channel exists between the function program for detecting an adsorption event and the host. The function program for detecting an adsorption event is configured to report an adsorption event to the Bluetooth host after detecting an adsorption action of a Bluetooth device by using a magnetic sensor. After receiving the adsorption event, the host obtains identification information of the Bluetooth device through coil communication. This may alternatively be understood as that the host may obtain the identification information of the Bluetooth device in a coil adsorption connection manner.

The Bluetooth chip layer includes a controller (controller) 304, which may be understood as a Bluetooth chip. The Bluetooth chip includes a radio frequency (Radio Frequency, RF) module and a link layer (Link Layer). The RF may be configured to implement radio frequency-related analog and digital parts, to complete most basic data sending and receiving. That is, the RF may be configured to process a task related to a radio frequency signal (for example, scan a broadcast packet or send a Bluetooth connection request to the Bluetooth device). The link layer may determine a broadcast channel, a data transmission channel, and the like, so that a terminal reliably receives and/or sends data on a frequency band supported by the RF. In addition, the link layer may further determine a state of Bluetooth, for example, a scanning state and an initiating state. In the scanning state, the terminal may receive data (for example, receive a broadcast packet) through the broadcast channel. In the initiating state, the terminal receives and processes only confirmation data that is sent by a secondary device and that is used for confirming a connection, and does not receive or process a broadcast packet.

The host and the controller may communicate through a physical interface, namely, a host controller interface (host controller interface, HCI). For example, the controller may send data to the host through the HCI, and the host may send a command and data to the controller through the HCI.

It may be understood that the controller may process a radio frequency signal, and the host may communicate with the controller, so that the controller may actively initiate a BLE scan, or the host may initiate an instruction for a BLE scan to the controller, to indicate the controller to initiate a BLE scan.

Usually, in pairing and connection (specifically, a proximity discovery connection manner), the host initiates an instruction for a first BLE scan to the controller, and after receiving the instruction, the controller performs the first BLE scan. In a background reconnection procedure in a reconnection, the controller actively initiates a second BLE scan when determining that a first condition is met. The first condition may be one or more of conditions in which a quantity of pieces of identification information recorded in a whitelist stored in the terminal is not 0, the terminal does not establish a Bluetooth connection to any Bluetooth device of a corresponding type, and a Bluetooth state of the terminal is in an enabled state. For the first BLE scan and the second BLE scan, refer to the foregoing related term explanations of the pairing and connection and the background reconnection. Details are not described herein.

It may be understood that the host in the terminal may obtain the identification information of the Bluetooth device in the coil adsorption connection manner. The controller may obtain the identification information of the Bluetooth device in a manner of scanning a broadcast packet. Only the controller may receive or send a radio frequency signal. Therefore, when the host in the terminal wants to initiate a Bluetooth connection to the Bluetooth device after obtaining the identification information of the Bluetooth device in the coil adsorption connection manner, the host needs to send at least the identification information of the Bluetooth device to the controller, and then the controller initiates a Bluetooth connection request to the Bluetooth device. That is, after the identification information of the Bluetooth device is obtained in the connection manner of scanning a broadcast packet or the coil adsorption connection manner, the controller sends a connection request to the Bluetooth device that needs to be connected.

It may be understood that the Bluetooth architecture of the terminal shown in FIG. 3 is a host+controller dual-chip standard architecture. The Bluetooth architecture of the terminal may alternatively be another architecture.

For example, the Bluetooth architecture of the terminal may alternatively be a single-chip architecture, that is, the host and the controller are integrated into a chip. The host and the controller do not need to communicate through the physical interface, namely, the HCI, and may directly interact through a logical interface (for example, an application programming interface). For another example, the Bluetooth architecture of the terminal may alternatively be a customized dual-chip architecture. The host and the controller communicate through the physical interface, namely, the HCI, but a used communication protocol is defined by a manufacturer.

It may be understood that the connection method provided in the embodiments of this application is also applicable to another Bluetooth architecture (for example, the single-chip architecture or the customized dual-chip architecture) other than the host+controller dual-chip standard architecture. This is not limited in this specification.

With reference to the foregoing term descriptions and implementations of several other connection methods, the following describes advantages of the connection method in the embodiments of this application through comparison by using an example in which a Bluetooth keyboard is used as a Bluetooth device and a tablet is used as a terminal.

In an implementation of a Bluetooth connection, based on a requirement, it is set in a program of a Bluetooth processing procedure that in a reconnection scenario, the tablet can establish a background reconnection (that is, perform the foregoing second BLE scan) only when it is determined that the tablet and the keyboard are in an adsorbed state. A coil adsorption connection manner has a shorter obtaining time than a connection manner of scanning a broadcast packet. Therefore, it can be implemented, to some extent, that when both a BLE broadcast and an adsorption event exist, the terminal does not first receive the BLE broadcast, but first pops up a window and establishes a reconnection in the coil adsorption connection manner. It may be understood that a designer may set, based on a specific requirement, that a background reconnection depends on the adsorbed state, for example, to resolve a problem that when a plurality of different Bluetooth keyboards are simultaneously located in a Bluetooth communication range of the terminal, and the Bluetooth keyboards send identification information (for example, a broadcast packet or an adsorption event) to the terminal by using different policies (for example, proximity discovery or coil adsorption), a keyboard connected to the terminal is probably not a keyboard to which a user wants to be connected. The specific requirement is not limited in this specification.

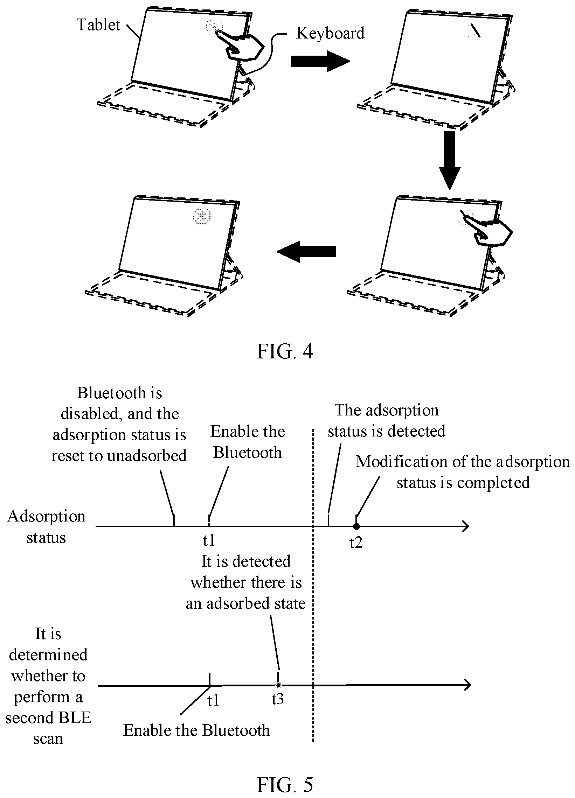

However, in this method, as shown in FIG. 4, when the tablet and the keyboard remain in the adsorbed state, and on a tablet side, a Bluetooth function is switched from on to off and then from off to on, after the Bluetooth function is switched from on to off, all Bluetooth states are reset, and an adsorption status is reset to an unadsorbed state. As shown in FIG. 5, after the Bluetooth function is switched from off to on again, for example, Bluetooth is enabled at a moment t1, the adsorption status is detected again, and the adsorption status is modified from unadsorbed to adsorbed, and modification of the adsorption status is completed at a moment t2 (that is, the adsorption status is modified from unadsorbed to the adsorbed state). In a period of modifying the adsorption status, a reconnection function is asynchronously performed. Before the second BLE scan in the reconnection is performed, it is determined, at a moment t3, whether the adsorption status is adsorbed. If t3 is less than t2, the found adsorption status is unadsorbed, and in this case, the second BLE scan cannot be successfully performed. That is, to implement compatibility with connection policies of Bluetooth devices of different models, the terminal modifies some code logic, resulting in a timing problem in code execution. Consequently, a code execution result is inconsistent with an expected result (which may alternatively be understood as a program vulnerability bug). Similarly, a same timing problem also exists in another type of Bluetooth device such as a terminal and a Bluetooth stylus.

It may be understood that the timing problem shown in FIG. 4 and FIG. 5 is merely an example. For Bluetooth devices of a same type, to implement compatibility with different connection policies of different Bluetooth devices, in consideration of some determining logic problems, the terminal modifies code logic, resulting in an unpredictable timing problem or code bug, for example, a problem that a normal reconnection cannot be implemented or a disconnection cannot be implemented. In addition, if new code logic is added or the code logic is modified based on the timing problem, another unpredictable bug occurs, resulting in a problem such as a heavy code workload.

However, according to the connection method provided in the embodiments of this application, the second BLE scan in the reconnection does not need to be performed based on a determining condition in which the adsorption status is adsorbed, but instead priority control is added between a plurality of different connection manners supported by Bluetooth devices of different models. After discovering a keyboard in a connection manner, the terminal does not immediately establish a connection to the keyboard, but first determines whether a priority of the connection manner is a highest priority; and if the priority of the connection manner is not the highest priority, waits for a preset duration (for example, 1s), and determines whether the terminal obtains identification information of the keyboard again in another connection manner with a higher priority within the 1s, and if the terminal obtains the identification information of the keyboard again in the another connection manner with a higher priority within the 1s, establishes a connection to the keyboard in the connection manner with a higher priority.

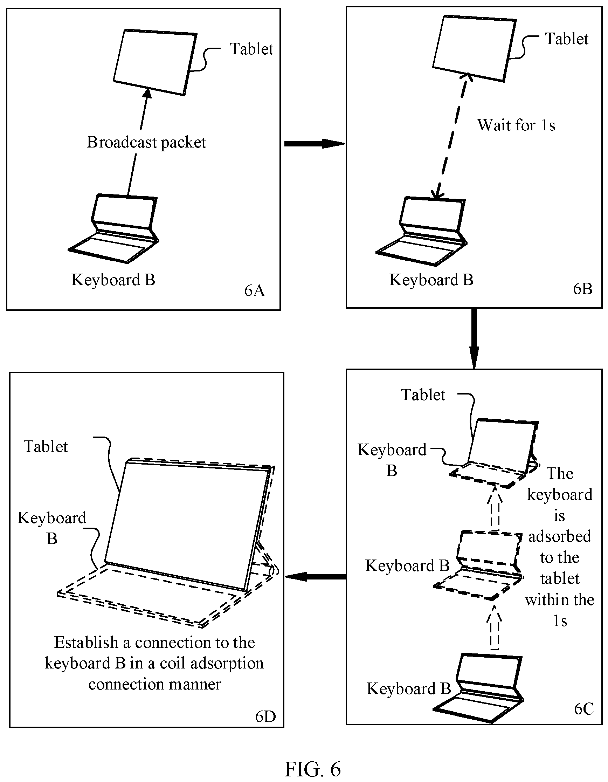

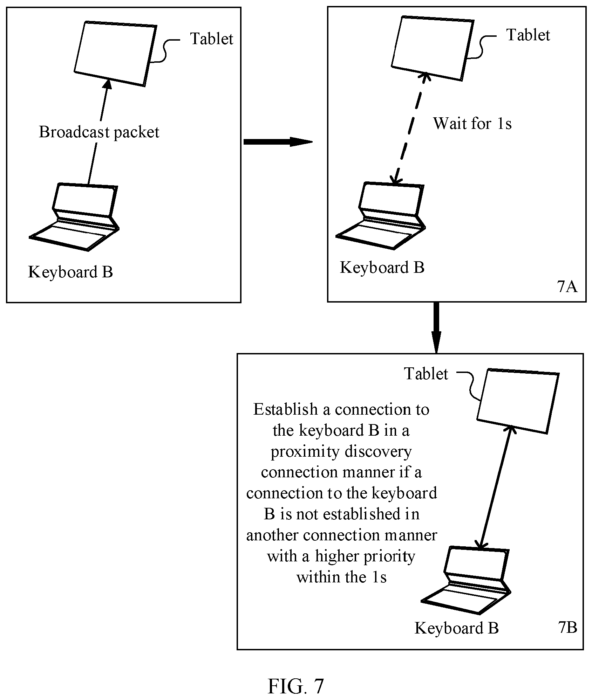

For example, for a keyboard (keyboard A) of a model A, a priority of the coil adsorption connection manner is a highest priority for the terminal. After obtaining identification information of the keyboard A in the coil adsorption connection manner, the terminal may initiate a connection request to the keyboard A. For a keyboard (keyboard B) of a model B, a priority of the connection manner of scanning a broadcast packet (the proximity discovery connection manner or the background reconnection) is lower than the priority of the coil adsorption connection manner for the terminal. As shown in 6A and 6B in FIG. 6, after discovering the keyboard B in the proximity discovery connection manner and obtaining identification information of the keyboard B, the tablet waits for 1s because a priority of the proximity discovery connection manner is not the highest priority for the keyboard A, and determines whether the tablet discovers the keyboard B in another connection manner with a higher priority (for example, the coil adsorption connection manner) within the 1s. As shown in 6C in FIG. 6, if the tablet discovers the keyboard B in the coil adsorption connection manner (which may alternatively be understood as that the identification information of the keyboard B is obtained in the coil adsorption connection manner) within the 1s, the tablet establishes a connection to the keyboard B in the coil adsorption connection manner, as shown in 6D in FIG. 6. As shown in 7A and 7B in FIG. 7, if the tablet does not obtain the identification information of the keyboard B in another connection manner with a higher priority within the 1s, it is determined to establish a connection to the keyboard B in the proximity discovery connection manner.

Therefore, processing procedures of Bluetooth devices of different models are uniformly coordinated based on a priority, to avoid a problem such as an excessively heavy code workload that is caused due to a timing problem that occurs when the terminal modifies original code logic to implement compatibility with different connection policies of different Bluetooth devices.

### Embodiment 1

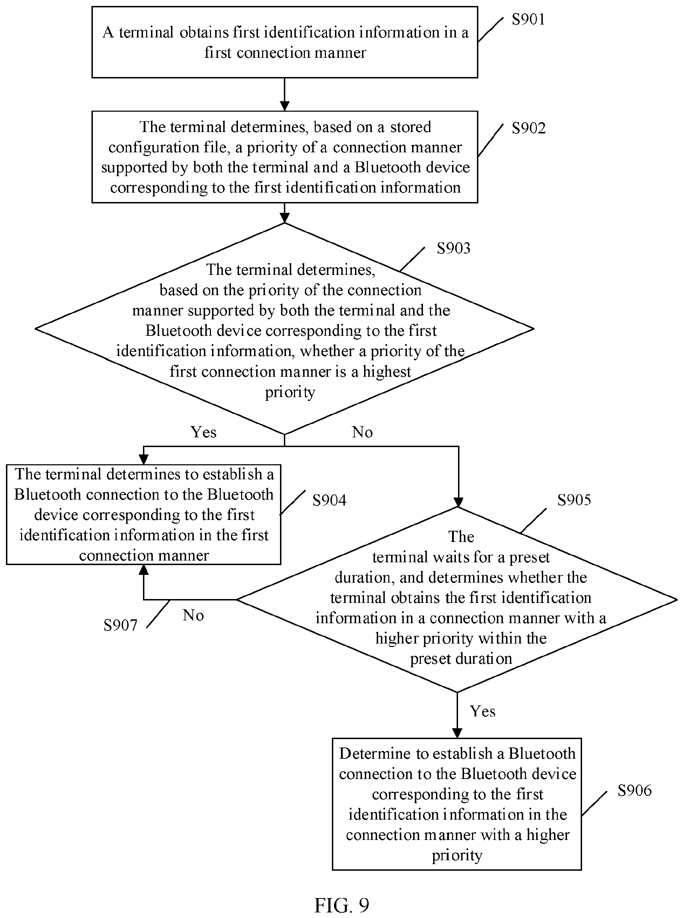

With reference to the foregoing term descriptions and the method flowchart shown in FIG. 9, the following describes in detail a connection method provided in this embodiment of this application.

In this embodiment of this application, a configuration file is stored in a terminal, and the configuration file is used to record a priority corresponding to a connection manner. In some embodiments, the configuration file is further used to record a connection manner correspondingly supported by a Bluetooth device.

In the description of this specification, the configuration file may also be referred to as configuration information. That is, the configuration file and the configuration information are different expressions of a same concept in this specification.

For example, as shown in Table 1, the configuration file records the priority corresponding to the connection manner. The connection manner includes H1, H2, and H3, and a priority relationship is H1>H2>H3.

As shown in Table 2, the configuration file further records a connection manner correspondingly supported by each model of Bluetooth device. The Bluetooth device includes a device A (a device that is of a model A and whose model id is A), a device B (a device that is of a model B and whose model id is B), and a device C (a device that is of a model C and whose model id is C). Connection manners supported by the device A include H1, H2, and H3, connection manners supported by the device B include H1 and H3, and connection manners supported by the device C include H1 and H2.

**Table 1**

| Connection manner | Priority |
|---|---|
| H1 | 1 |
| H2 | 2 |
| H3 | 3 |
| ... | ... |

**Table 2**

| Bluetooth devices of different models | Connection manner | | |
|---|---|---|---|
| | H1 | H2 | H3 |
| Model id: A | Y | Y | Y |
| Model id: B | Y | N | Y |
| Model id: C | N | N | Y |
| ... | ... | ... | ... |

Optionally, the connection manner (for example, the connection manner recorded in Table 1) in the priority of the connection manner recorded in the configuration file may be all connection manners supported by a plurality of terminals (all the connection manners supported by the plurality of terminals may alternatively be understood as a set of connection manners supported by all Bluetooth devices supported by the plurality of terminals, or may alternatively be understood as all connection manners supported by Bluetooth devices of all models of Bluetooth devices of a same type, for example, all connection manners supported by Bluetooth keyboards of all models of Bluetooth keyboards). In this case, the Bluetooth device (for example, the Bluetooth devices of different models recorded in Table 2) recorded in the configuration file is all the Bluetooth devices supported by the plurality of terminals. In the following, a configuration file in which a recorded connection manner is all connection manners supported by a plurality of terminals and a recorded Bluetooth device is all Bluetooth devices supported by the plurality of terminals is recorded as a first configuration file.

For a terminal of a specific model, all connection manners supported by the terminal may be consistent or inconsistent with all connection manners supported by a Bluetooth device supported by the terminal. For example, all the connection manners supported by the terminal are H2 and H3, all Bluetooth devices supported by the terminal are the device A and the device B, and all connection manners supported by the device A and the device B are H1, H2, and H3. When all the connection manners supported by the terminal are inconsistent with all the connection manners supported by the Bluetooth device supported by the terminal, all the connection manners supported by the plurality of terminals may alternatively be understood as all the connection manners supported by the Bluetooth device supported by the terminal of a specific model.

It may be understood that when the configuration file is the first configuration file, for a terminal of a specific model, the connection manner in the priority of the connection manner recorded in the configuration file may include a connection manner that is not supported by the terminal, or may include a connection manner that is not supported by a Bluetooth device supported by the terminal. For example, the connection manner in the priority of the configuration manner recorded in the configuration file includes H1, H2, and H3, connection manners supported by the terminal (for example, a terminal 2) of a specific model are H1 and H3, and a connection manner supported by a Bluetooth device (for example, the device C) supported by the terminal 2 is H3.

In this embodiment of this application, when the configuration file is the first configuration file, the terminal may determine, based on the first configuration file, a priority corresponding to a connection manner supported by both the terminal and the Bluetooth device.

For example, after a terminal 1 obtains identification information of the device A in a connection manner, the terminal 1 may determine, based on the first configuration file, a priority corresponding to a connection manner supported by both the terminal 1 and the device A.

For example, as shown in Table 3, based on the connection manner supported by the device A and a connection manner supported by the terminal 1 that are recorded in Table 2 in the first configuration file, if the connection manner supported by both the terminal 1 and the device A includes H1, H2, and H3, the terminal 1 and the device A may establish a connection in any one of connection manners H1, H2, or H3. Then, based on Table 1 recorded in the first configuration file, it can be obtained that in the connection manner supported by both the terminal 1 and the device A, H1 has a highest priority, H2 has a second highest priority, and H3 has a lowest priority.

For example, after the terminal 2 obtains identification information of the device B in a connection manner, the terminal 2 may determine, based on the first configuration file, a priority corresponding to a connection manner supported by both the terminal 2 and the device B.

For example, as shown in Table 4, based on the connection manner supported by the device B and the connection manner supported by the terminal 2 that are recorded in Table 2 in the first configuration file, if the connection manner supported by both the terminal 2 and the device B includes H1 and H3, the terminal 2 and the device B may establish a connection in any one of connection manners H1 or H3. Then, based on Table 1 recorded in the first configuration file, it can be obtained that in the connection manner supported by both the terminal 2 and the device B, H1 has a highest priority, and H3 has a lowest priority.

For example, after a terminal 3 obtains identification information of the device C in a connection manner, the terminal 3 may determine, based on the first configuration file, a priority corresponding to a connection manner supported by both the terminal 3 and the device C.

For example, as shown in Table 5, based on the connection manner supported by the device C and a connection manner supported by the terminal 3 that are recorded in Table 2 in the first configuration file, if the connection manner supported by both the terminal 3 and the device C includes only H3, the terminal 3 and the device C may establish a connection only in the connection manner H3. Then, based on Table 1 recorded in the first configuration file, it can be obtained that in the connection manner supported by both the terminal 3 and the device C, H3 has a highest priority.

It may be understood that the terminal 1, the terminal 2, and the terminal 3 refer to models of terminals, and the terminal 1, the terminal 2, and the terminal 3 are terminals of different models.

Similarly, when the configuration file is the first configuration file, the terminal may further determine, based on the first configuration file, a connection manner with a highest priority in the connection manner supported by both the terminal and the Bluetooth device, for example, content recorded in parentheses in columns corresponding to pairing selection in Table 3, Table 4, and Table 5.

**Table 3**

| | Connection manner | | | Pairing selection |
|---|---|---|---|---|
| | H1 | H2 | H3 | |
| Terminal 1 | Y | Y | Y | H1>H2>H3 (H1) |
| Model id: A | Y | Y | Y | |

**Table 4**

| | Connection manner | | | Pairing selection |
|---|---|---|---|---|
| | H1 | H2 | H3 | |
| Terminal 2 | Y | Y or N | Y | H1>H3 (H1) |
| Model id: B | Y | N | Y | |

**Table 5**

| | Connection manner | | | Pairing selection |
|---|---|---|---|---|
| | H1 | H2 | H3 | |
| Terminal 3 | Y or N | Y or N | Y | H3 (H3) |
| Model id: C | Y | N | Y | |

Optionally, the connection manner (for example, the connection manner recorded in Table 1) in the priority of the connection manner recorded in the configuration file may alternatively be all connection manners supported by a specific terminal. In this case, the Bluetooth device (for example, the Bluetooth devices of different models recorded in Table 2) recorded in the configuration file is all Bluetooth devices supported by the specific terminal.

It may be understood that when all the connection manners supported by the terminal are consistent with all connection manners supported by the Bluetooth device supported by the terminal, all the connection manners supported by the specific terminal may alternatively be understood as all connection manners supported by the Bluetooth device supported by the specific terminal.

Similarly, the specific terminal may further determine, based on the first configuration file, a priority of a connection manner supported by both the specific terminal and a Bluetooth device of a model, or determine a connection manner with a highest priority in a connection manner supported by both the specific terminal and a Bluetooth device of a model.

However, for the specific terminal, the specific terminal supports any connection manner recorded in the configuration file stored in the terminal. In this case, when the specific terminal determines that the Bluetooth device supports a connection manner, both the terminal and the Bluetooth device support the connection manner.

For example, for the specific terminal (for example, a terminal 4), the terminal 4 supports any connection manner (namely, any connection manner recorded in Table 1 or Table 2) recorded in the configuration file stored in the terminal. After the terminal 4 obtains identification information of the device B in a connection manner, the terminal 4 may determine, based on the first configuration file, a priority corresponding to a connection manner supported by both the terminal 4 and the device B.

Specifically, as shown in Table 6, the terminal 4 needs to determine, based on Table 2, only the connection manner supported by the device B. The connection manner supported by the device B is the connection manner supported by both the terminal 4 and the device B. Then, based on Table 1 recorded in the first configuration file, it can be obtained that in the connection manner supported by both the terminal 3 and the device C, H3 has a highest priority.

**Table 6**

| | Connection manner | | | Pairing selection |
|---|---|---|---|---|
| | H1 | H2 | H3 | |
| Model id: B | Y | N | Y | H1>H3 |

For ease of description, in the following, a configuration file in which a recorded connection manner is all connection manners supported by a specific terminal and a recorded Bluetooth device is all Bluetooth devices supported by the specific terminal is recorded as a second configuration file.

It may be understood that a connection manner supported by the terminal for Bluetooth devices of different models and a priority may be recorded in the configuration file in another recording manner. This is not limited in this embodiment of this application.

For example, in another implementation, the configuration file may alternatively be used to record a connection manner supported by both a terminal of a specific model and each Bluetooth device of a specific model supported by the terminal and a corresponding priority or a highest priority.

For example, the configuration file does not include Table 1 and Table 2, and the configuration file includes data content shown in Table 7. As shown in Table 7, a priority of a connection manner supported by both a terminal 5 and each of a device A, a device B, a device C, and a device D in all Bluetooth devices of a specific model (for example, the device A, the device B, the device C, and the device D of different models) supported by the terminal 5 is recorded in the configuration file. It may be understood that priorities of connection manners supported by different Bluetooth devices may be inconsistent. For example, both the device A and the device D support H1 and H2. However, for the device A, H1 has a highest priority, and a priority of H2 is lower than the priority of H1; and for the device D, H2 has a highest priority, and the priority of H2 is higher than a priority of H1.

It may be understood that the data content included in Table 7 may alternatively be recorded in the configuration file in another form, for example, in a form shown in Table 8. This is not limited in this specification. For example, after the terminal 5 obtains identification information of the device D in a connection manner, the terminal 5 may determine, based on the first configuration file, a priority corresponding to a connection manner supported by both the terminal 5 and the device D. Specifically, the terminal 5 determines a connection manner and priority information corresponding to the identification information of the device D based on a model identifier (namely, a model identifier D) in the identification information of the device D. The connection manner and the priority information are the priority corresponding to the connection manner supported by both the terminal and the device D.

For ease of description, in the following, a configuration file (for example, a configuration file that does not include Table 1 and Table 2, and includes Table 7 or Table 8) used to record a connection manner supported by both a terminal of a specific model and each Bluetooth device of a specific model supported by the terminal and a corresponding priority or a highest priority is referred to as a third configuration file.

**Table 7**

| Model identifier | Priority |
|---|---|
| Model id: A (a connection manner supported by both the device A and the terminal 5 and a priority) | H1>H2>H3 (H1) |
| Model id: B (a connection manner supported by both the device B and the terminal 5 and a priority) | H1>H3 (H1) |
| Model id: C (a connection manner supported by both the device C and the terminal 5 and a priority) | H3 (H3) |
| Model id: D (a connection manner supported by both the device D and the terminal 5 and a priority) | H2>H1 (H2) |

**Table 8**

| Model identifier | Connection manner | Priority |
|---|---|---|
| Model id: A (a connection manner supported by both the device A and the terminal 5 and a priority) | H1 | 1 |
| | H2 | 2 |
| | H3 | 3 |
| | | |
| Model id: B (a connection manner supported by both the device B and the terminal 5 and a priority) | H1 | 1 |
| | H3 | 2 |
| | | |
| Model id: C (a connection manner supported by both the device C and the terminal 5 and a priority) | H3 | 1 |
| | | |
| Model id: D (a connection manner supported by both the device D and the terminal 5 and a priority) | H3 | 1 |
| | H2 | 2 |

In another implementation, the configuration file may alternatively be used to record priorities of all connection manners supported by a terminal of a specific model, and does not include a connection manner supported by a Bluetooth device. For example, Table 1 and Table 2 are reused. The configuration file may include only data content in Table 1, and does not include data content in Table 2. Table 1 is used to record priorities of all connection manners supported by a terminal of a specific model. For ease of description, in the following, a pairing file that includes only Table 1 and does not include Table 2 and in which Table 1 is used to record priorities of all connection manners supported by a terminal of a specific model is referred to as a fourth configuration file.

In this embodiment of this application, a format of the configuration file may be an extensible markup language (extentsible markup language, xml) format, a document (document, DOC) format, an excel table format, or another file format. This is not limited in this specification.

In this embodiment of this application, when it is ensured that the connection manner H1, H2, or H3 is a different connection manner, H1, H2, or H3 may be any one of a coil adsorption connection manner, a connection manner of scanning a broadcast packet, and an NFC connection manner. It may be understood that H1, H2, or H3 may alternatively be another implementable connection manner. This is not limited in this specification. For detailed descriptions of the coil adsorption connection manner and the connection manner of scanning a broadcast packet, refer to related descriptions (for example, related descriptions in FIG. 1 and FIG. 2) in another embodiment of this application. Details are not described herein.

In this embodiment of this application, when content of a connection manner (for example, a new connection manner is added) or a priority of a connection manner needs to be updated, content in the configuration file in the terminal may be updated in the following two manners:
1. The content in the configuration file is updated by updating a version.
   For example, content of a difference between connection manners supported by a version 7.0 and a version 8.0 of the terminal and priorities of the connection manners is stored in an upgrade package. After the terminal executes a task of making an upgrade from the version 7.0 to the version 8.0, the content in the configuration file can be updated.
2. An updated configuration file is sent to the terminal by a cloud.

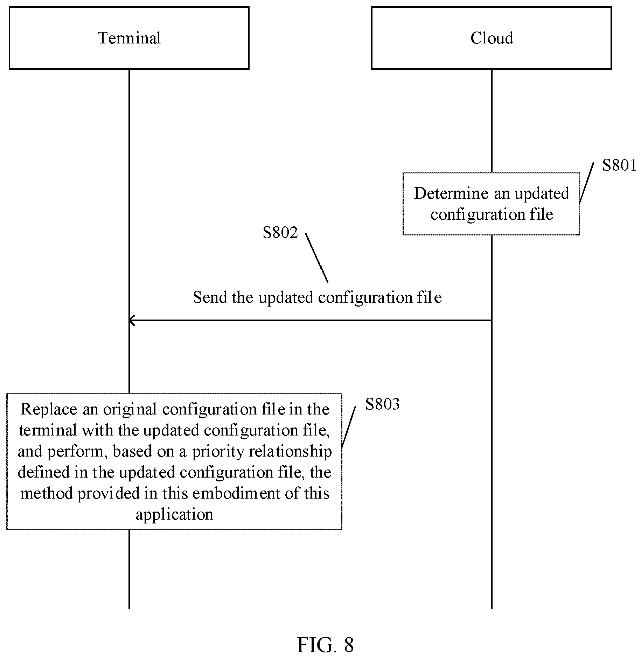

For example, as shown in FIG. 8, when the content of the connection manner or the priority of the connection manner needs to be updated, the updated configuration file may be sent to the terminal by the cloud. For ease of description, the original configuration file stored in the terminal is referred to as an original configuration file below. Specifically, the following steps are included.

S801: The cloud determines the updated configuration file.

In this embodiment of this application, the cloud may determine content in the updated configuration file in a manner of receiving an input from a user.

S802: The cloud sends the updated configuration file to the terminal. Correspondingly, the terminal receives the updated configuration file sent by the cloud.

In this embodiment of this application, after receiving a sending determining instruction entered by the user, the cloud may send the updated configuration file to the terminal.

S803: The terminal replaces the original configuration file with the updated configuration file, and performs the connection method in this solution based on an association relationship that is between a connection manner and a corresponding priority and that is defined in the updated configuration file.

It may be understood that the content in the configuration file may be updated in another implementable update manner. This is not limited in this specification.

In this embodiment of this application, the cloud may be a server, a cloud server, or the like. A specific form of the server is not limited in this embodiment of this application. Related descriptions of the cloud in another embodiment of this specification are the same as this.

As shown in FIG. 9, the connection method provided in this embodiment of this application includes the following steps.

S901: The terminal obtains first identification information in a first connection manner.

In this embodiment of this application, the identification information includes a model identifier of a Bluetooth device and a Bluetooth address of the Bluetooth device.

The terminal may determine a model of the Bluetooth device corresponding to the model identifier in the first identification information based on the model identifier. For example, the Bluetooth device corresponding to the model identifier included in the first identification information is the foregoing device A. The terminal may determine a unique Bluetooth device based on the Bluetooth address of the Bluetooth device in the first identification information. For example, a device corresponding to the Bluetooth address of the Bluetooth device in the first identification information is a device A1 (which may alternatively be understood as a device A1 in a device of a model A). It may be understood that the first identification information may further include other identification information, for example, a random address. This is not limited in this specification.

In this embodiment of this application, the first connection manner may be any connection manner in a connection manner in which the terminal obtains the identification information of the device A.

For example, if a connection manner supported by both the terminal and the device A is shown in Table 3, the first connection manner may be any one of H1, H2, and H3.

In this embodiment of this application, the device A is any Bluetooth device in a Bluetooth device supported by the terminal. The device A may be a Bluetooth device that is paired with and connected to the terminal, or may be a Bluetooth device that is not paired with and connected to the terminal.

It may be understood that, that the terminal obtains first identification information in a first connection manner may be specifically as follows: The terminal obtains, in the first connection manner, a data packet sent by the device A, where the data packet includes the first identification information. For example, the terminal obtains, in a connection manner of scanning a broadcast packet, a broadcast packet (the broadcast packet is a data packet) published by the device A, and the broadcast packet includes the first identification information. For example, the terminal obtains an adsorption event (the adsorption event is a data packet) in a coil adsorption connection manner, and the adsorption event includes the first identification information.

For detailed descriptions of the terminal, the Bluetooth device, the broadcast packet, the adsorption event, the connection manner of scanning a broadcast packet, and the coil adsorption connection manner, refer to related descriptions (for example, the foregoing term explanations) in another embodiment of this specification. Details are not described herein.

S902: The terminal determines, based on a stored configuration file, a priority of a connection manner supported by both the terminal and a Bluetooth device corresponding to the first identification information.

For example, when the Bluetooth device corresponding to the model identifier included in the first identification information is the foregoing device A, and the configuration file stored in the terminal is the foregoing first configuration file, that the terminal determines, based on a stored first configuration file, a priority of a connection manner supported by both the terminal and the Bluetooth device corresponding to the first identification information specifically includes: The terminal determines, based on the stored first configuration file and a capability of the terminal, a priority of the connection manner supported by both the terminal and the device A. Specifically, refer to the foregoing related descriptions of Table 1, Table 2, Table 3, Table 4, and Table 5. Details are not described herein.

For example, when the configuration file stored in the terminal is the foregoing second configuration file, the terminal determines, based on the stored second configuration file, a connection manner supported by the Bluetooth device (for example, a model identifier A, namely, the device A) corresponding to the model identifier included in the first identification information, where the connection manner supported by the device A is the connection manner supported by both the terminal and the Bluetooth device (the device A) corresponding to the first identification information, and then may obtain, based on a priority of a connection manner recorded in the second configuration file, a priority of the connection manner supported by both the device A and the terminal. Specifically, refer to the foregoing related descriptions of Table 1, Table 2, and Table 6. Details are not described herein.

For example, when the configuration file stored in the terminal is the foregoing third configuration file, that the terminal determines, based on a stored configuration file, a priority of a connection manner supported by both the terminal and the Bluetooth device corresponding to the first identification information specifically includes: The terminal determines a connection manner and priority information corresponding to the model identifier (for example, a model identifier A, namely, the device A) in the first identification information based on the stored configuration file, where the connection manner and the priority information are the priority of the connection manner supported by both the terminal and the Bluetooth device corresponding to the first identification information.

It may be understood that the device A described in this embodiment of this application and the device A described in Table 1 to Table 5 may be a same Bluetooth device of a same model, or may be different Bluetooth devices of a same model.

S903: The terminal determines, based on the priority of the connection manner supported by both the terminal and the Bluetooth device corresponding to the first identification information, whether a priority of the first connection manner is a highest priority.

For example, the Bluetooth device corresponding to the first identification information is the foregoing device A, and the priority that is of the connection manner supported by both the terminal and the device A and that is determined by the terminal is shown in Table 4, that is, priorities of connection manners supported by both the terminal and the device A are H1>H2>H3, and a priority of the connection manner H1 is a highest priority. Whether the priority corresponding to the first connection manner is the highest priority may be obtained by determining a connection manner that is in H1, H2, or H3 and that is the first connection manner.

S904: When determining that the priority of the first connection manner is the highest priority, the terminal determines to establish a Bluetooth connection to the Bluetooth device corresponding to the first identification information in the first connection manner.

For example, the Bluetooth device corresponding to the model identifier included in the first identification information is the foregoing device A, and the Bluetooth device corresponding to the Bluetooth address included in the first identification information is the device A1.

That the terminal determines to establish a Bluetooth connection to the Bluetooth device corresponding to the first identification information in the first connection manner specifically includes: The terminal determines to establish a Bluetooth connection to the device A1 in the first connection manner. That the terminal determines to establish a Bluetooth connection to the device A1 in the first connection manner may alternatively be understood as that a program task of establishing a Bluetooth connection to the device A1 may continue to be executed in the first connection manner.

For example, when it is set, on a terminal side, that regardless of in a pairing and connection scenario or a reconnection scenario, the Bluetooth device is connected in the coil adsorption connection manner, before a connection request is sent to the Bluetooth device, a pairing box for confirming a connection needs to pop up, and then the connection request is sent to the Bluetooth device after a confirmation instruction is received from the user. If the first connection manner is the coil adsorption connection manner, after determining to establish a Bluetooth connection to the device A1 in the first connection manner, the terminal may pop up the pairing box for confirming a connection, and continue to execute, in the coil adsorption connection manner, a task related to establishment of a Bluetooth connection to the device A1. The following descriptions of determining to establish a Bluetooth connection to a corresponding Bluetooth device (corresponding to the first identification information or second identification information) in a connection manner (the first connection manner or a second connection manner) are the same as this.

S905: When determining that the priority of the first connection manner is not the highest priority, the terminal waits for a preset duration, and determines whether the terminal obtains the first identification information in a connection manner with a higher priority within the preset duration.

This may alternatively be understood as that when determining that the priority of the first connection manner is not the highest priority, the terminal waits for the preset duration, and determines whether the terminal obtains the first identification information in the second connection manner within the preset duration. A priority of the second connection manner is higher than the priority of the first connection manner.

In this embodiment of this application, "a time within the preset duration" may include an endpoint value (including one endpoint value or two endpoint values), or may not include an endpoint value. For example, "the time within the preset duration" includes the endpoint value, the preset duration is 100 ms, and a start moment is Y ms (Y milliseconds). In this case, the time within the preset duration refers to [Y, Y+100 ms], namely, any time from the Y ms to the Y+100 ms (including the Y ms and the Y+100 ms).

In this embodiment of this application, the preset duration may be 100 ms (milliseconds), or may be another appropriate duration (for example, 200 ms or 1s). This is not limited in this specification.

In this embodiment of this application, the preset duration may alternatively be customized by the user. Specifically, the terminal provides the user with an input port for setting a value of the preset duration, and receives, through the input port, the value of the preset duration that is customized by the user.

S906: When determining that the terminal obtains the first identification information in a connection manner with a higher priority within the preset duration, the terminal determines to establish a Bluetooth connection to the Bluetooth device corresponding to the first identification information in the connection manner with a higher priority.

This may alternatively be understood as that when determining that the terminal obtains the first identification information in the second connection manner within the preset duration, and the priority of the second connection manner is higher than the priority of the first connection manner, the terminal determines to establish a connection to the Bluetooth device corresponding to the first identification information in the second connection manner.

It may be understood that, that the terminal determines that the terminal obtains the first identification information in a connection manner with a higher priority within the preset duration may be specifically as follows: The terminal obtains the first identification information in the second connection manner within the preset duration, and completes, within the preset duration, a task of determining whether the priority of the second connection manner is higher than the priority of the first connection manner. Alternatively, this may be as follows: The terminal obtain the first identification information in the second connection manner within the preset duration, but does not complete, within the preset duration, a task of determining whether the priority of the second connection manner is higher than the priority of the first connection manner. It may be understood that in this case, the terminal needs to complete the determining task before determining whether to establish a connection to the Bluetooth device corresponding to the first identification information in the first connection manner or the second connection manner.

S907: When determining that the terminal does not obtain the first identification information in a connection manner with a higher priority within the preset duration, the terminal determines to establish a Bluetooth connection to the Bluetooth device corresponding to the first identification information in the first connection manner.

For example, steps S904 to S906 may be implemented by using a for statement.

Specifically, the for statement is used to cyclically determine whether the terminal obtains the first identification information in the second connection manner within a time from a first moment to a second moment. If the terminal obtains the first identification information in the second connection manner within the time from the first moment to the second moment, it is determined to establish a Bluetooth connection to the Bluetooth device corresponding to the first identification information in the second connection manner, a loop is skipped, and loop content is no longer executed. If the terminal does not obtain the first identification information in the second connection manner within the time from the first moment to the second moment (that is, a for loop ends and the terminal still does not obtain the first identification information in the second connection manner), it is determined that the terminal is to establish a Bluetooth connection to the Bluetooth device corresponding to the first identification information in the first connection manner. The first moment may be an obtaining moment at which the first identification information is obtained, or may be a determining moment at which it is determined that the priority of the first connection manner is not the highest priority. The second moment is a moment obtained after the preset duration is added to the first moment.

For example, steps S904 to S906 may alternatively be implemented by using a for statement and a timer (timer) class in java.

Specifically, a task task (namely, a task of determining to establish a Bluetooth connection to the Bluetooth device corresponding to the first identification information in the first connection manner) may be executed after a delay delay of milliseconds (for example, 100 ms) by invoking a timer.schedule(task, delay) method. In addition, the for statement is concurrently used to cyclically determine whether the terminal obtains the first identification information in the second connection manner within a time from a first moment to a second moment. If the terminal obtains the first identification information in the second connection manner within the time from the first moment to the second moment, it is determined to establish a Bluetooth connection to the Bluetooth device corresponding to the first identification information in the second connection manner, a loop is skipped, loop content is no longer executed, and a timer is cancelled, for example, the timer is cleared by invoking a .clearTimeout method (which may alternatively be understood as that the task of determining, after the preset duration, to establish a Bluetooth connection to the Bluetooth device corresponding to the first identification information in the first connection manner is cancelled). If the terminal does not obtain the first identification information in the second connection manner within the time from the first moment to the second moment, a timer is not cancelled, and after the preset duration, the terminal automatically establishes a Bluetooth connection to the Bluetooth device corresponding to the first identification information in the first connection manner. It may be understood that if the timer is set, when the loop is called out, the timer needs to be cancelled (execution of a task task in the timer is cancelled), that is, the task of determining, after the delay of 100 ms, to establish a Bluetooth connection to the device A1 in the first connection manner is cancelled.

It may be understood that steps S904 to S906 may alternatively be implemented in another manner. This is not limited in this specification.

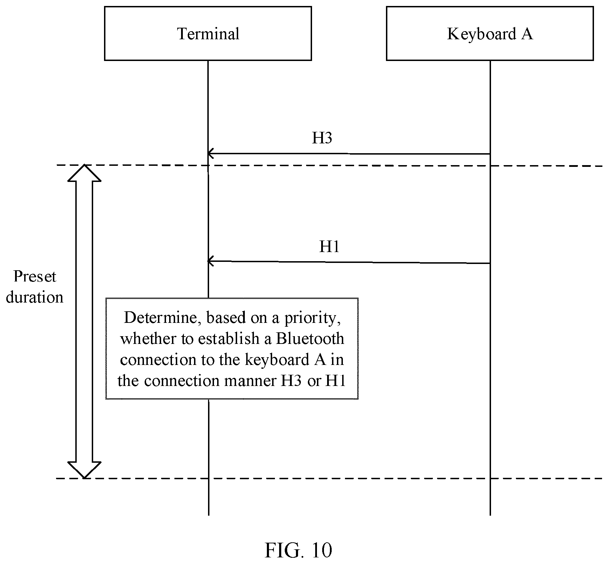

For example, the connection method shown in FIG. 9 may alternatively be understood as a connection method shown in FIG. 10. As shown in FIG. 10, the terminal first obtains first identification information of a keyboard A in the connection manner H3, and when determining that a priority of the connection manner H3 is not a highest priority, waits for a preset duration; and when the first identification information of the keyboard A is obtained in the connection manner H1 within the preset duration, determines, based on a priority relationship, whether to establish a Bluetooth connection to the keyboard A in the connection manner H1 or the connection manner H3. Specifically, when a priority of the connection manner H1 is higher than the priority of the connection manner H3, it is determined to establish a Bluetooth connection to the keyboard A in the connection manner H1.

In some implementations, after step S905 and before step S906, step S903 and step S905 may be cyclically performed, that is, the terminal may incrementally wait for the preset duration. The terminal may incrementally wait for the preset duration until the terminal obtains the first identification information in a connection manner with a highest priority in the connection manner supported by both the terminal and the Bluetooth device corresponding to the first identification information, or until the terminal does not obtain the first identification information in a connection manner with a higher priority within the preset duration.

For example, when it is determined that the terminal obtains the first identification information in the second connection manner within the preset duration, a value of the first connection manner is replaced with a value of the second connection manner, and step S903 is performed to determine whether a priority of a current first connection manner (namely, the second connection manner) is the highest priority. When it is determined that the priority of the current first connection manner is not the highest priority, step S905 is performed to wait for a preset duration, and determine whether the terminal obtains the first identification information in a connection manner with a higher priority within in the preset duration, and so on. If the terminal does not obtain the identification information of the Bluetooth device in a connection manner with a higher priority within the preset duration, it is determined to establish a connection to the Bluetooth device corresponding to the first identification information in the current first connection manner. Alternatively, if the terminal obtains the first identification information in the connection manner with a highest priority in the connection manner supported by both the terminal and the Bluetooth device corresponding to the first identification information, it is determined to establish a Bluetooth connection to the Bluetooth device corresponding to the first identification information in the second connection manner.

It may be understood that if steps S904 to S906 are performed by using the method in which a timer and a for statement are used, in the timer, after the preset duration is delayed, the task of determining to establish a Bluetooth connection to the device A1 in the first connection manner is executed. If the identification information of the device A1 is obtained in a connection manner with a higher priority within the preset duration, the step of waiting for a preset duration is cyclically performed, and the task in the timer.schedule(task, delay) method is correspondingly modified to a task of determining, after the preset duration, to establish a Bluetooth connection to the device A1 in the second connection manner, and so on.

Usually, the user frequently uses only a same terminal and a same keyboard (for example, the foregoing keyboard A). The terminal may support a plurality of types of different Bluetooth keyboards, and the terminal may support different connection policies for different keyboards. For example, the terminal supports the coil adsorption connection manner for a keyboard B, and designs a set of code logic for the coil adsorption connection manner supported by the keyboard B. For example, a connection confirmation box pops up provided that the terminal receives identification information of the keyboard in the coil adsorption connection manner. For the keyboard A frequently used by the user, if the keyboard A supports both a proximity discovery connection manner and the coil adsorption connection manner, and the user frequently connects the terminal to the keyboard A in the coil adsorption connection manner, in an adsorption process between the keyboard A and the terminal, the keyboard A establishes a connection to the terminal in the proximity discovery connection manner. After the keyboard A is adsorbed to the terminal, the terminal again pops up a pairing box for establishing a connection to the keyboard A. Consequently, a timing problem of a plurality of repeated connections occurs. In addition, each time the user uses the keyboard A, the timing problem occurs at least once, causing inconvenience to the user and an unnecessary performance loss (for example, a power loss of the terminal).

However, according to the connection method provided in this embodiment of this application, the configuration file stores a priority of a connection manner supported by both the terminal and each of different models of keyboards supported by the terminal. After the terminal obtains identification information of the keyboard in a connection manner, the terminal determines, based on a priority of a pairing manner supported by both the terminal and the keyboard, whether the current connection manner is a highest priority in the priority of the pairing manner supported by both the terminal and the keyboard. If the current connection manner is not the highest priority in the priority of the pairing manner supported by both the terminal and the keyboard, the terminal waits for a period of time, and determines whether the terminal obtains the identification information of the keyboard again in a connection manner with a higher priority or a highest priority in the waiting period, and if the terminal obtains the identification information of the keyboard again in a connection manner with a higher priority or a highest priority in the waiting period, establishes a Bluetooth connection to the keyboard in the connection manner with a higher priority or a highest priority. Therefore, a timing problem of a plurality of repeated connections can be avoided, an unnecessary performance loss can be reduced, and efficiency of using a Bluetooth function can be improved.

Alternatively, to resolve a timing problem of logical determining caused by different Bluetooth devices supporting different connection policies, and to implement compatibility with different connection policies, code logic is modified, and consequently another unpredictable code bug occurs.

Therefore, in this solution, processing procedures of Bluetooth devices of different models are uniformly coordinated based on a priority, to avoid a problem such as an excessively heavy code workload that is caused due to a timing problem that occurs when the terminal modifies original code logic to implement compatibility with different connection policies of different Bluetooth devices.

In some other implementations, timing may be started at a moment at which the step of waiting for a preset duration starts to be performed, and a maximum waiting duration is set. The terminal may cyclically perform step S902 to step S906, and incrementally wait for the preset duration until a total waiting duration is greater than the maximum waiting duration, or until the terminal does not obtain the identification information of the Bluetooth device in a connection manner with a higher priority within the preset duration, or until the terminal obtains device information of the Bluetooth device in a connection manner with a highest priority in a connection manner in a first set, and step S902 to step S906 are no longer cyclically performed. It may be understood that the total waiting duration is a time difference between the moment at which the terminal starts to perform the step of waiting for a preset duration and current time.

It may be understood that an execution occasion for performing the step of determining whether the total waiting duration is less than the maximum waiting duration is not limited in this specification. The step may be performed at a time interval (for example, 1 ms), or may be performed between step S905 and step S906.

For example, the step is performed at an interval. For example, the step of determining whether the total waiting duration is greater than or equal to the maximum waiting duration is performed at an interval of 5 ms. If the total waiting duration is greater than or equal to the maximum waiting duration, the foregoing timer timer is cancelled, and the task specified in the timer is immediately executed. For example, it is specified in the timer that after the 100 ms created in the timer, the terminal executes a task of determining to establish a Bluetooth connection to a Bluetooth device K in the first connection manner. After it is determined that the total waiting duration is greater than or equal to the maximum waiting duration, the timer is cancelled, and it is immediately determined to establish a Bluetooth connection to the Bluetooth device K in the first connection manner.

For example, the step is performed between step S905 and step S906. When it is determined that the terminal obtains the first identification information in the second connection manner within the preset duration, it is determined whether the total waiting duration is less than the maximum waiting duration. If the total waiting duration is not less than the maximum waiting duration, step S905 is performed, and it is determined to establish a Bluetooth connection to the Bluetooth device corresponding to the first identification information in the second connection manner.

In this embodiment of this application, when it is determined that the first identification information is obtained in the second connection manner within the preset duration, waiting may be cancelled, for example, the timer is cancelled by invoking the .clearTimeout method, and it is immediately determined to establish a Bluetooth connection to the Bluetooth device corresponding to the first identification information in the second connection manner. However, waiting may not be cancelled, and it is not immediately determined to establish a connection to the Bluetooth device corresponding to the first identification information in the second connection manner, but step S902 to step S906 continue to be performed until the preset duration ends.

In some possible implementations, the maximum waiting duration may not be additionally set, but the preset duration is used as the maximum waiting duration. That is, if the terminal obtains the first identification information in a connection manner with a higher priority within the preset duration, it is not immediately determined to establish a connection to a device B corresponding to the first identification information in the connection manner with a higher priority, but step S902 to step S906 continue to be performed until the preset duration ends, it is determined that the terminal obtains the first identification information in one or more connection manners with a higher priority within the preset duration, and it is determined to establish a connection to the Bluetooth device corresponding to the first identification information in a connection manner with a highest priority in the one or more connection manners.

In a possible implementation, if the terminal obtains the second identification information in a connection manner with a higher priority within the preset duration in steps S905 and S906, when a model identifier included in the second identification information is the same as the model identifier included in the first identification information, and a Bluetooth address included in the second identification information is different from the Bluetooth address included in the first identification information, the terminal determines to establish a connection to a Bluetooth device corresponding to the second identification information in the second connection manner.

For example, both the Bluetooth device corresponding to the model identifier included in the first identification information and a Bluetooth device corresponding to the model identifier included in the second identification information are the device A, the Bluetooth device corresponding to the Bluetooth address included in the first identification information is the device A1, and a Bluetooth device corresponding to the Bluetooth address included in the second identification information is a device A2 (which may alternatively be understood as a device A2 in the device of the model A). The device A1 and the device A2 are different Bluetooth devices of a same model. That is, the identification information sequentially obtained by the terminal in the first connection manner and the second connection manner is information about two different devices of a same model, and the priority of the second connection manner is higher than the priority of the first connection manner. In this case, the terminal determines to establish a connection to the Bluetooth device (namely, the device A2) corresponding to the second identification information in the second connection manner.

In this embodiment of this application, both the device A1 and the device A2 may be Bluetooth devices that are paired with and connected to the terminal, or may be Bluetooth devices that are not paired with and connected to the terminal.

For detailed descriptions of the second identification information, refer to the related descriptions of the first identification information in this specification. Details are not described herein.

In this embodiment of this application, the terminal may further display a priority of a connection manner supported by both a Bluetooth device of a model and the terminal to the user, or may provide the user with a function of customizing a priority of a connection manner supported by both a Bluetooth device of a model and the terminal, and update the configuration file based on priority information customized by the user. For example, the terminal displays priority information of the connection manner supported by both the device A (for example, a Bluetooth keyboard or a Bluetooth stylus) and the terminal to the user in an interface display manner, and outputs prompt information for prompting the user with information indicating that priorities of connection manners gradually decrease from top to bottom on a page, and a priority sequence is customized by performing a touch and hold operation and then sliding up and down. After the priority information customized by the user is received, the priority information recorded in the configuration file stored in the terminal is updated to the priority information customized by the user. Therefore, the terminal performs, based on a priority indicated by the user, the connection method provided in this embodiment of this application, to further reduce a probability of a timing problem that occurs because connection manners supported by different Bluetooth devices are inconsistent, and reduce power consumption.

In some possible implementations, when the configuration file stored in the terminal is the foregoing fourth configuration file (that is, the configuration file is used to record priorities of all connection manners supported by the terminal), the connection method provided in this embodiment of this application may be performed based on the priority recorded in the configuration file. For example, the terminal obtains third identification information in a first connection manner; determines, based on the configuration file, whether a priority corresponding to the first connection manner is a highest priority in the configuration file; and when determining that the priority corresponding to the first connection manner is the highest priority, determines to establish a connection to a Bluetooth device corresponding to the third identification information in the first connection manner; or when determining that the priority corresponding to the first connection manner is not the highest priority, waits for a preset duration, and determines whether the terminal obtains fourth identification information in a second connection manner that has a priority that is higher than the priority corresponding to the first connection manner within the preset duration; and if the terminal obtains the fourth identification information in the second connection manner within the preset duration, establishes a connection to a Bluetooth device corresponding to the fourth identification information in the second connection manner. The Bluetooth device corresponding to the third identification information and the Bluetooth device corresponding to the fourth identification information may be a same device of a same model or different devices of a same model, or may be two different devices of different models.

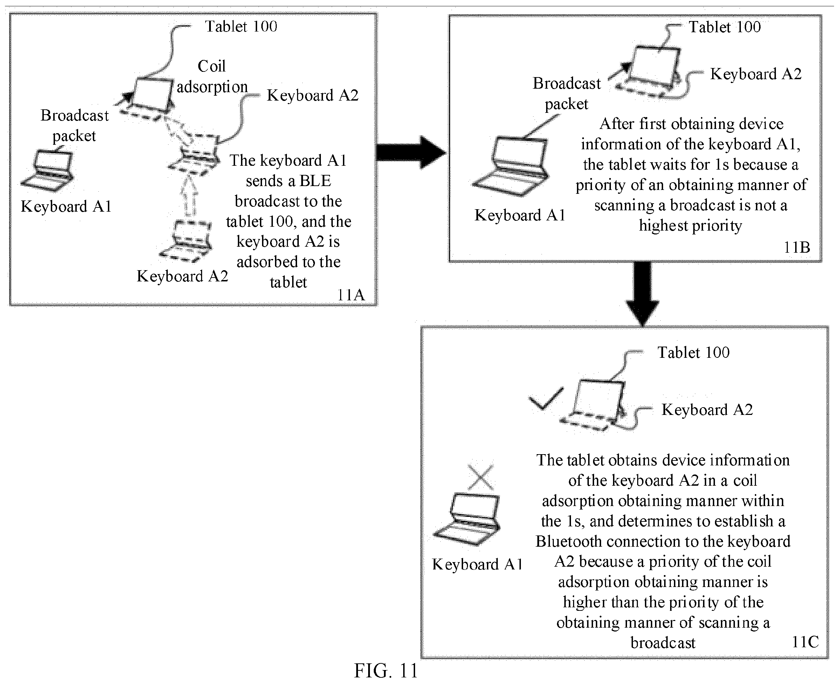

For example, a case in which a priority of a coil adsorption connection manner is higher than a priority of a connection manner of scanning a broadcast packet is stored in the configuration file. As shown in FIG. 11, a keyboard A1 and a keyboard A2 are different devices of a same model, both of the two keyboards are located in a Bluetooth transmission range of a tablet 100, the keyboard A1 sends a broadcast packet to the tablet 100, and the keyboard A2 is adsorbed to the tablet (refer to 11A in FIG. 11). In this case, if the tablet 100 first obtains device information of the keyboard A1 in a manner of scanning the BLE broadcast packet, and determines that the connection manner of scanning a broadcast packet is not a connection manner with a highest priority, the tablet waits for a preset duration (for example, 100 milliseconds), does not initiate a Bluetooth connection task to the keyboard A1 within the preset duration in the connection manner of scanning a broadcast packet, and determines whether the terminal obtains device information in another connection manner with a higher priority within the 100 ms (refer to 11B in FIG. 11). If the terminal obtains device information in another connection manner with a higher priority within the 100 ms, for example, the tablet obtains device information of the keyboard A2 in the coil adsorption connection manner within the 100 ms, when determining that the priority of the coil adsorption connection manner is higher than the priority of the connection manner of scanning a broadcast packet, the terminal determines to establish a Bluetooth connection to the keyboard A2 in the coil adsorption connection manner (refer to 11C in FIG. 11).

It may be understood that the connection method provided in this embodiment of this application may be used in a scenario in which the terminal and the Bluetooth device support two or more connection manners. In a scenario in which the terminal and all models of Bluetooth devices supported by the terminal support only one connection manner or support only one another connection manner in addition to a connection manner that is conventionally set, after obtaining identification information of the Bluetooth device in this connection manner, the terminal may directly establish a Bluetooth connection to the Bluetooth device in the connection manner without determining a priority. For example, in some implementations, after step S902 and before step S903, the method further includes: determining whether a quantity of connection manners supported by both the terminal and the Bluetooth device corresponding to the first identification information is equal to 1. If the quantity of connection manners supported by both the terminal and the Bluetooth device corresponding to the first identification information is equal to 1, the terminal determines to establish a Bluetooth connection to the Bluetooth device corresponding to the first identifier in the first connection manner (which may alternatively be understood as that step S904 is performed). Alternatively, if the quantity of connection manners supported by both the terminal and the Bluetooth device corresponding to the first identification information is not equal to 1, step S903 is performed to determine whether the priority of the first connection manner is the highest priority.

It may be understood that the connection method described in this embodiment of this application is not only applicable to a Bluetooth connection, but also applicable to another wireless communication connection, for example, a WiFi connection, an RFID connection, a ZigBee connection, or a mobile communication connection.

### Embodiment 2

It may be understood that in a pairing and connection procedure (which is specifically that a terminal obtains identification information of a Bluetooth device in a proximity discovery connection manner), a host initiates an instruction for a first BLE scan to a controller, and after receiving the instruction, the controller performs the first BLE scan. With reference to the foregoing term descriptions, the Bluetooth architecture on the terminal side, and the method steps described in FIG. 9, the following describes, by using an example in which a Bluetooth keyboard is used as the foregoing Bluetooth device, a tablet is used as the foregoing terminal, a connection manner supported by both the terminal and each Bluetooth device of a specific model supported by the terminal and a corresponding priority or a highest priority are recorded in a configuration file (that is, the configuration file stored in the terminal is the foregoing third configuration file), and for a keyboard of a model A supported by the terminal, a connection manner supported by both the terminal and the keyboard of the model A and a priority include that a priority of a coil adsorption connection manner is higher than a priority of a connection manner of scanning a broadcast packet (a proximity discovery connection manner or a connection manner that is conventionally set), in detail how to specifically use, for the first BLE scan initiated by the host, the method provided in this embodiment of this application.

In this embodiment of this application, the configuration file is stored on a terminal side, and data content included in the configuration file is shown in Table 9. Table 9 may be understood as follows: A connection manner in which the terminal obtains identification information of the keyboard (a keyboard A) of the model A may include the coil adsorption connection manner and the connection manner of scanning a broadcast packet, and the coil adsorption connection manner has a highest priority. In a pairing procedure, the connection manner of scanning a broadcast packet is used to refer to the proximity discovery connection manner.

**Table 9**

| Model identifier | Connection manner | Priority |
|---|---|---|
| Model id: A (a connection manner supported by both the keyboard A and the terminal and a priority) | Coil adsorption | 1 |
| | Scan a broadcast packet | 2 |

In this embodiment of this application, after receiving the instruction that is used for performing the first BLE scan and that is sent by the host, the controller in the tablet starts to perform the first BLE scan, and after obtaining a broadcast packet of the keyboard A by using the first BLE scan, reports the broadcast packet of the keyboard A to the host. The host determines whether the priority of the connection manner of scanning a broadcast packet is a highest priority in the priority of the connection manner supported by both the keyboard A and the terminal. If the priority of the connection manner of scanning a broadcast packet is the highest priority in the priority of the connection manner supported by both the keyboard A and the terminal, the host establishes a Bluetooth connection to the keyboard A. If the priority of the connection manner of scanning a broadcast packet is not the highest priority in the priority of the connection manner supported by both the keyboard A and the terminal, the host waits for a preset duration, and determines whether the terminal obtains the identification information of the keyboard A in another connection manner with a higher priority within the preset duration.

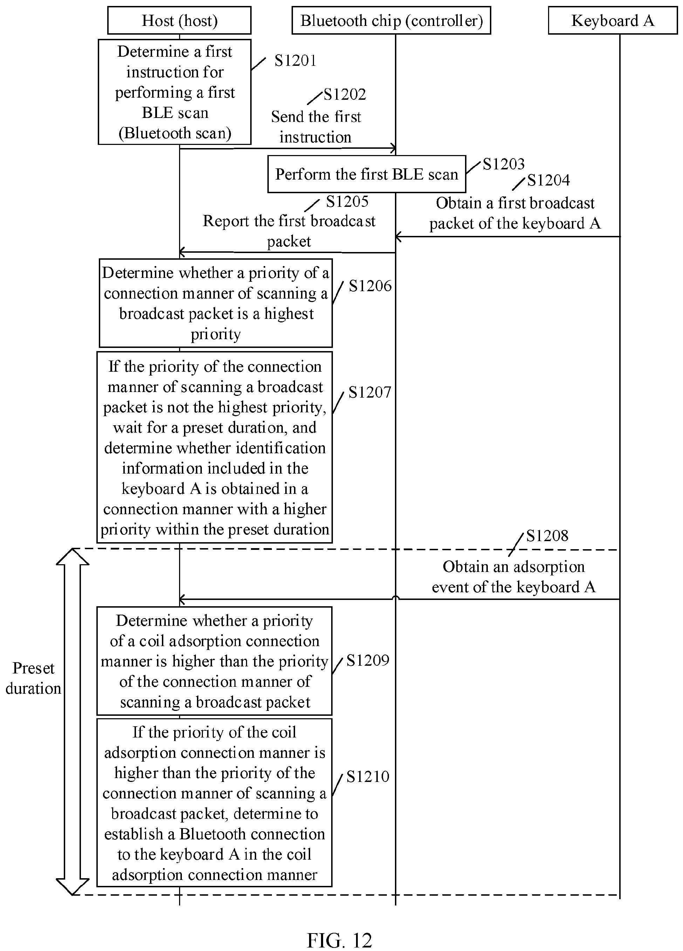

Specifically, as shown in FIG. 12, the connection method provided in this embodiment of this application includes the following steps.

S1201: The host (host) determines a first instruction for performing the first BLE scan.

In this embodiment of this application, the determining a first instruction for performing the first BLE scan specifically includes: The host sets a scan parameter of the first BLE scan, and sends the first instruction to the controller when determining that a preset condition is met, where the first instruction includes the scan parameter of the first BLE scan.

Usually, the scan parameter may include a scan window (namely, a time width of one scan) and a scan interval (namely, a time difference between start times of two consecutive scan windows). The scan parameter may further include more or fewer parameters than the scan window and the scan interval. This is not limited in this specification.

It may be understood that the preset condition may be that a Bluetooth state of the terminal is an on state, and a screen of the terminal is in an on state. Descriptions of the preset condition are merely an example herein. The preset condition may further include more or fewer conditions than the screen-on state. This is not limited in this specification.

S1202: The host sends the first instruction to the controller. Correspondingly, the controller receives the first instruction.

For example, when the terminal meets the preset condition, the host sets the scan parameter of the first BLE scan, and sends the first instruction to the controller. After receiving the instruction, the controller performs the scan until a broadcast packet of the keyboard is obtained through scanning or until the screen of the terminal is changed from the on state to an off state, and the first BLE scan is ended.

It may be understood that the preset condition may further include more or fewer conditions than the foregoing condition in which a Bluetooth function of the terminal is in an enabled state and the screen on state. For example, the preset condition may further include a condition in which the terminal is in a screen-on state and/or the terminal does not establish a Bluetooth connection to a Bluetooth device of a corresponding type. For example, when the terminal supports only one device for Bluetooth devices of a same model, the determining condition may not include the condition in which the terminal does not establish a Bluetooth connection to a Bluetooth device of a corresponding type; or when the terminal supports a plurality of connections for Bluetooth devices of a same model, the determining condition may not include the condition in which the terminal does not establish a Bluetooth connection to a Bluetooth device of a corresponding type.

S1203: The controller performs the first BLE scan.

In this embodiment of this application, that the controller performs the first BLE scan specifically includes: After receiving the first instruction sent by the host, the controller performs the first BLE scan based on the first instruction.

S1204: The controller obtains a first broadcast packet of the keyboard A.

For example, the first broadcast packet is a broadcast packet published by the keyboard A through BLE broadcast. The first broadcast packet includes identification information of the keyboard A. The identification information includes a model identifier and a Bluetooth address of the keyboard A, and may further include one or more of data such as a device name and a device model identifier (model id) of the keyboard A, and a type of a data packet supported by the keyboard A.

S1205: The controller reports the first broadcast packet to the host. Correspondingly, the host receives the first broadcast packet.

S1206: The host determines whether a priority of a connection manner of scanning a broadcast packet is a highest priority.

In this embodiment of this application, that the host determines whether a connection manner of scanning a broadcast packet is a connection manner with a highest priority specifically includes: The host determines, based on the configuration file stored in the terminal, a priority of a connection manner supported by both the terminal and a Bluetooth device corresponding to the model identifier included in the first broadcast packet. For example, the Bluetooth device corresponding to the model identifier included in the first broadcast packet is the keyboard A, and a priority of a connection manner supported by both the keyboard A and the terminal is shown in Table 9. The host further determines whether the priority of the connection manner of scanning a broadcast packet is a highest priority in the priority of the connection manner supported by both the keyboard A and the terminal. For details, refer to the related descriptions of steps S902 and S903 in FIG. 9. Details are not described herein.

S1207: If the priority of the connection manner of scanning a broadcast packet is not the highest priority, the host waits for a preset duration, and determines whether the identification information included in the keyboard A is obtained in a connection manner with a higher priority within the preset duration.

In this embodiment of this application, after obtaining the first broadcast packet through scanning, the terminal may further change a Bluetooth state of the first BLE scan from a scanning state (in the scanning state, the terminal may receive a broadcast packet through a broadcast channel corresponding to the first BLE scan) to an initiating state (in the initiating state, the terminal receives and processes only confirmation data that is sent by a secondary device and that is used for confirming a connection, and does not receive or process a broadcast packet), so that the terminal does not receive another broadcast packet within the preset duration.

In this embodiment of this application, if the priority of the connection manner of scanning a broadcast packet is a connection manner with a highest priority in the connection manner recorded in the configuration file, the terminal determines to establish a Bluetooth connection to the keyboard A in the connection manner of scanning a broadcast packet. If the priority of the connection manner of scanning a broadcast packet is not the connection manner with a highest priority in the connection manner recorded in the configuration file, the host waits for the preset duration, and determines whether the identification information of the keyboard A is obtained in a connection manner with a higher priority within the preset duration.

For example, the priority of the connection manner supported by both the keyboard A and the terminal is shown in Table 9. When determining that the priority of the connection manner of scanning a broadcast packet is not the highest priority in the priority of the connection manner supported by both the keyboard A and the terminal, the host waits for the preset duration, and determines whether the identification information included in the keyboard A is obtained in a connection manner with a higher priority within the preset duration.

For detailed descriptions of the preset duration, refer to related descriptions (for example, the related descriptions in step S905) in another embodiment of this specification. Details are not described herein. For a specific implementation method for waiting for the preset duration in step S 1207, refer to related descriptions (for example, the related descriptions in step S905) in another embodiment of this specification. Details are not described herein.

S1208: The host obtains an adsorption event of the keyboard A within the preset duration.

For example, after a coil of the keyboard A is adsorbed to a coil of the tablet, a magnetic sensor in the tablet reports the adsorption event to the host. In this embodiment of this application, for ease of description, the connection method provided in this embodiment of this application is described by using an example in which the adsorption event carries the identification information of the Bluetooth device.

S1209: The host determines whether a priority of a coil adsorption connection manner is higher than the priority of the connection manner of scanning a broadcast packet.

For example, the host may determine, based on an association relationship that is between the connection manner supported by both the terminal and the keyboard A and the priority and that is recorded in the configuration file that is shown in Table 9 and that is stored in the terminal, whether the priority of the coil adsorption connection manner is higher than the priority of the connection manner of scanning a broadcast packet.

S1210: When determining that the priority of the coil adsorption connection manner is higher than the priority of the connection manner of scanning a broadcast packet, the host determines to establish a Bluetooth connection to the keyboard A in the coil adsorption connection manner.

For example, if the association relationship that is between the connection manner and the priority and that is recorded in the configuration file is shown in Table 9, the priority of the coil adsorption connection manner is higher than the priority of the connection manner of scanning a broadcast packet.

For detailed descriptions of determining, by the terminal, to establish a Bluetooth connection to the keyboard A, refer to related descriptions (for example, the related descriptions of determining, by the terminal, to establish a Bluetooth connection to the keyboard A in step S907) in another embodiment of this specification. Details are not described herein.

It may be understood that the method procedure shown in FIG. 12 is applicable to the following scenarios:
1. A scenario in which no whitelist is stored in the terminal.
2. A scenario in which the terminal stores a whitelist, but the identification information of the keyboard A is not included in the whitelist. For example, a quantity of pieces of identification information included in the whitelist is 0. Alternatively, a quantity of pieces of identification information included in the whitelist is not 0, but the identification information of the keyboard A is not included in the whitelist.

**In** this embodiment of this application, the task of determining a priority of a connection manner of scanning a broadcast packet in step S1206 and the task of waiting for a preset duration, and determining whether the identification information of the keyboard A is obtained in a connection manner with a higher priority within the preset duration in step S1207 are executed by the host. It may be understood that in some other embodiments, the controller may perform step S1206 to determine a priority of a connection manner, and the host performs step S1207. This is not limited in this specification.

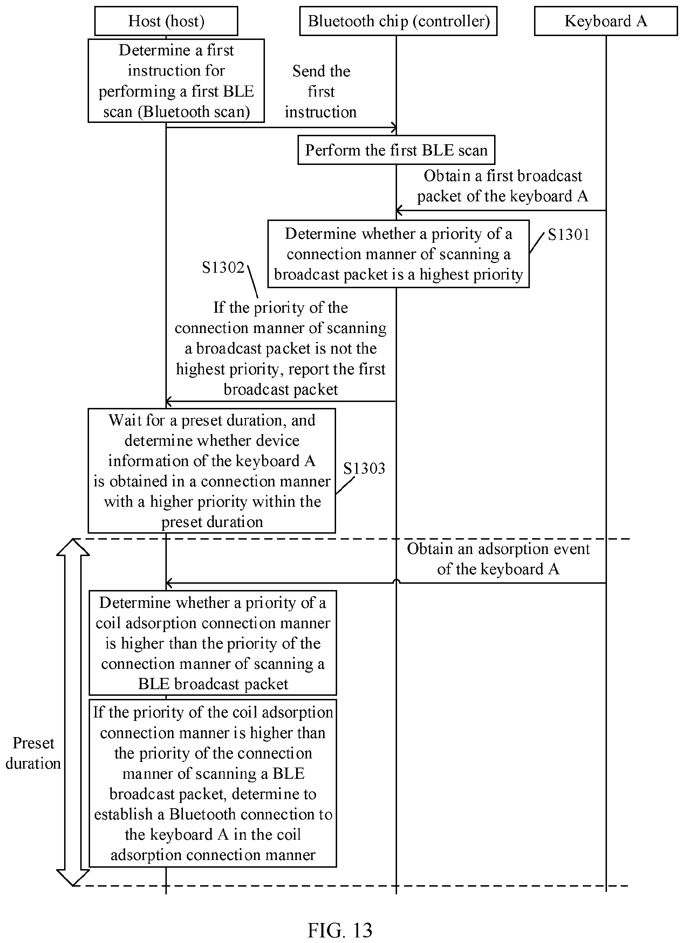

For example, as shown in FIG. 13, after the controller obtains the first broadcast packet in step S1204 and before the first broadcast packet is reported to the host in step S1205, the controller determines whether the priority of the connection manner of scanning a broadcast packet is the highest priority (shown in step S1301 in FIG. 13). If the priority of the connection manner of scanning a broadcast packet is the highest priority, it is determined to establish a Bluetooth connection to the keyboard A in the connection manner of scanning a broadcast packet. If the priority of the connection manner of scanning a broadcast packet is not the highest priority, the controller reports the first broadcast packet to the host (shown in step S1302 in the figure). Specifically, the host is notified that the identification information of the keyboard A is obtained in a connection manner that has a priority that is not the highest priority. After receiving the first broadcast packet, the host performs S1207, that is, waits for a preset duration, and determines whether the identification information of the keyboard A is obtained in a connection manner with a higher priority within the preset duration (shown in step S1303 in FIG. 13).

### Embodiment 3

In this embodiment of this application, in a background reconnection procedure, when determining that a first condition is met, a controller actively initiates a second BLE scan. With reference to the foregoing term descriptions, the Bluetooth architecture on the terminal side, and the related descriptions in FIG. 9, the following describes, by using an example in which a Bluetooth keyboard is used as a Bluetooth device, a tablet is used as a terminal, and a connection manner supported by both the terminal and each Bluetooth device of a specific model supported by the terminal and a corresponding priority or a highest priority are recorded in a configuration file (that is, the configuration file stored in the terminal is the foregoing third configuration file), in detail how to specifically use, for the second BLE scan initiated by the controller, the connection method provided in this embodiment of this application.

In this embodiment of this application, for related descriptions of the first condition, refer to related descriptions, for example, the related descriptions in FIG. 3, in another embodiment of this specification. Details are not described herein. For content recorded in the configuration file in the terminal, refer to the descriptions in Table 9. Details are not described herein.

In this embodiment of this application, the controller on a terminal side stores a whitelist. The whitelist is used to record identification information of a Bluetooth device that is paired with and connected to the terminal (after completing pairing and connection for a target Bluetooth device, a host on the terminal side adds identification information of the target Bluetooth device to the whitelist). The whitelist includes identification information of at least one Bluetooth device.

In this embodiment of this application, the content in the configuration file stored in the terminal includes a connection manner supported by both the terminal and a keyboard of a model A supported by the terminal and a priority, and specifically includes that a priority of a coil adsorption connection manner is higher than a priority of a connection manner of scanning a broadcast packet. For detailed descriptions of the configuration file, refer to the related descriptions of Table 9 in another embodiment of this specification. In the background reconnection, the connection manner of scanning a broadcast packet in Table 9 is used to refer to a connection manner of background reconnection.

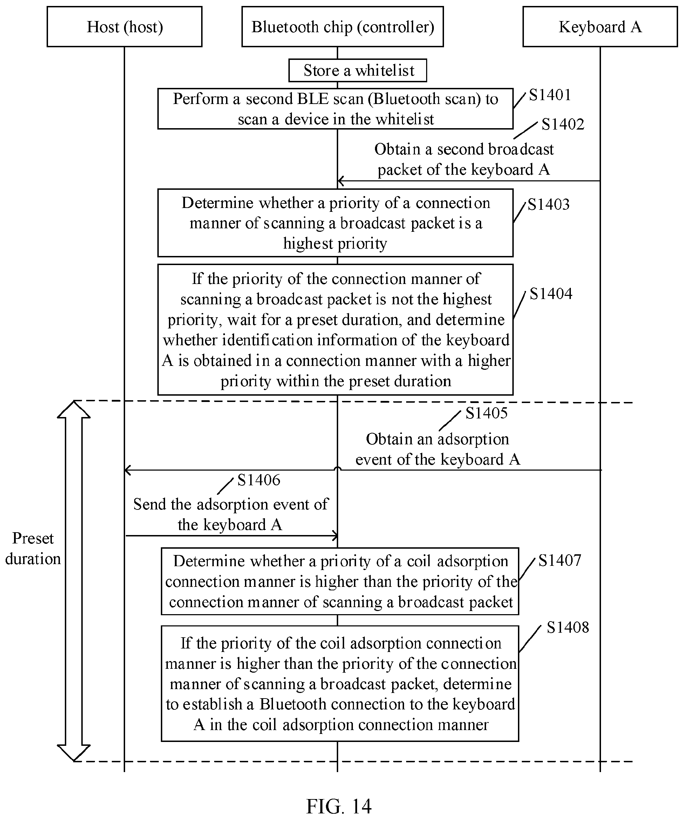

As shown in FIG. 14, in the connection method provided in this embodiment of this application, after the controller actively initiates the second BLE scan, and obtains identification information of the keyboard A by using the second BLE scan, the controller determines whether the priority of the connection manner of scanning a BEL broadcast packet is a connection manner with a highest priority. If the connection manner of scanning a BEL broadcast packet is not the connection manner with a highest priority, the controller waits for a preset duration, and determines whether the identification information of the keyboard A is obtained in another connection manner with a higher priority within the preset duration. The method specifically includes the following steps.

S1401: The controller (controller) in the terminal performs the second BLE scan.

In this embodiment of this application, the second BLE scan is a BLE scan that is in a background reconnection scenario and in which identification information of a Bluetooth device is obtained in the connection manner of scanning a broadcast packet, is actively initiated by the controller, and is used to scan whether any device in the whitelist exists in a Bluetooth communication range of the terminal.

S1402: The controller obtains a second broadcast packet of the keyboard A.

For example, the second broadcast packet is a broadcast packet published by the keyboard A through BLE broadcast. For data content included in the broadcast packet, refer to related descriptions, for example, the related descriptions of the first broadcast packet in step S1204, in another embodiment of this application. Details are not described herein.

S1403: The controller determines whether a priority of a connection manner of scanning a broadcast packet is a highest priority.

For a specific manner of determining whether the priority of the connection manner of scanning a broadcast packet is the highest priority, refer to related descriptions in another embodiment of this specification, for example, step S1206.

S1404: When determining that the connection manner of scanning a broadcast packet is not a connection manner with a highest priority, the controller waits for a preset duration, and determines whether the identification information of the keyboard A is obtained in a connection manner with a higher priority within the preset duration.

For descriptions of terms such as the preset duration, the connection manner of scanning a broadcast packet, and the priority, refer to related descriptions in another embodiment of this application. Details are not described herein.

S1405: The host obtains an adsorption event of the keyboard A within the preset duration.

In this embodiment of this application, the adsorption event carries identification information (for example, the identification information of the keyboard A). For descriptions of the adsorption event, refer to related descriptions in another embodiment of this specification, for example, step S1208.

S1406: The host sends the adsorption event of the keyboard A to the controller. Correspondingly, the controller receives the adsorption event of the keyboard A that is sent by the host.

S1407: The controller determines whether a priority of a coil adsorption connection manner is higher than the priority of the connection manner of scanning a broadcast packet.

S1408: When determining that the priority of the coil adsorption connection manner is higher than the priority of the connection manner of scanning a broadcast packet, the controller determines to establish a Bluetooth connection to the keyboard A in the coil adsorption connection manner.

For example, if the content recorded in the configuration file is shown in Table 9, the priority of the coil adsorption connection manner is higher than the priority of the connection manner of scanning a broadcast packet.

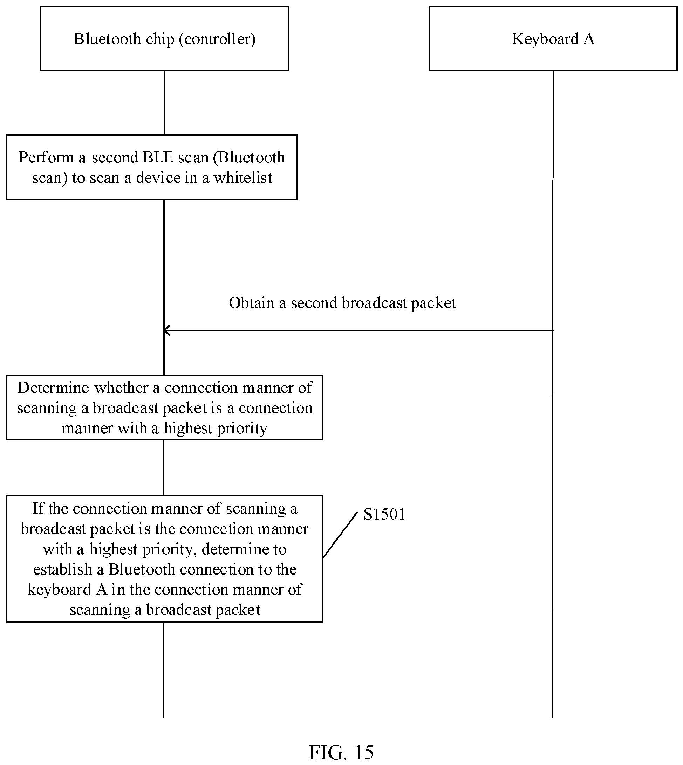

It may be understood that as shown in FIG. 15, in step S1403, if it is determined that the connection manner of scanning a broadcast packet is the connection manner with a highest priority, it is determined to establish a Bluetooth connection to the keyboard A (shown in S1501 in FIG. 15).

Therefore, processing procedures of Bluetooth devices of different models are uniformly coordinated based on a priority, to avoid a problem such as an excessively heavy code workload that is caused due to a timing problem that occurs when the terminal modifies original code logic to implement compatibility with different connection policies of different Bluetooth devices.

In some implementations, when the host stores the whitelist, the host may execute the task of determining whether a priority of a connection manner of scanning a broadcast packet is a highest priority in step S1402 and the task of waiting for a preset duration, and determining whether the identification information of the keyboard A is obtained in a connection manner with a higher priority within the preset duration in step S1403.

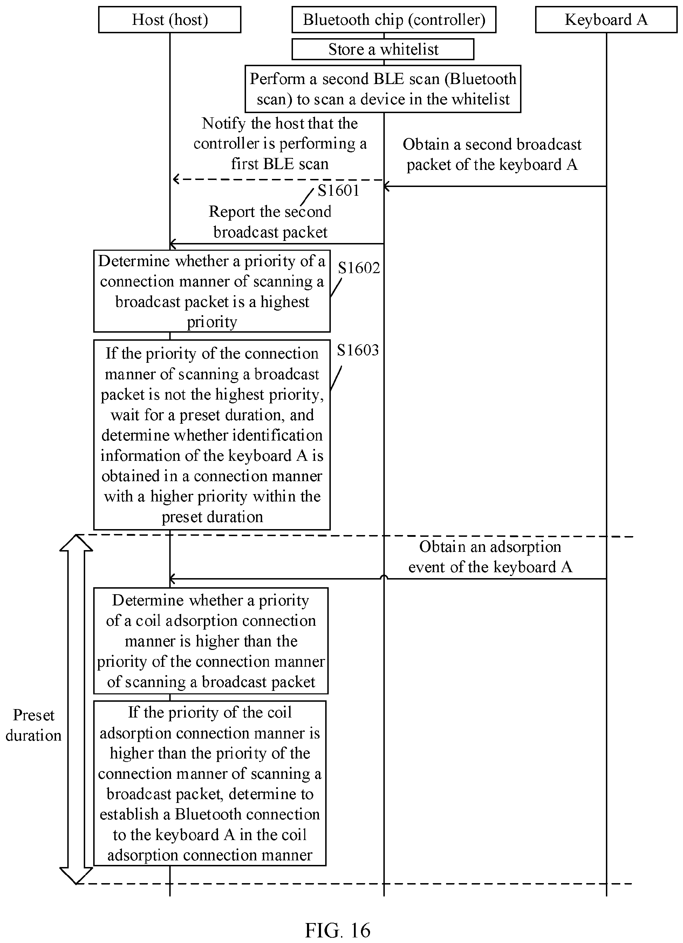

For example, as shown in FIG. 16, after performing step S1402 to obtain the second broadcast packet, the controller reports the second broadcast packet to the host (shown in S1601 in FIG. 16). After receiving the second broadcast packet, the host executes the task of determining whether a connection manner of scanning a broadcast packet is a connection manner with a highest priority in step S1403 (shown in S1602 in FIG. 16). If the connection manner of scanning a broadcast packet is not the connection manner with a highest priority, the host executes the task of waiting for a preset duration, and determining whether the identification information of the keyboard A is obtained in a connection manner with a higher priority within the preset duration in step S1404 (shown in S1603 in FIG. 16).

In some other implementations, the controller may perform step S1402, and the host executes the task of waiting for a preset duration, and determining whether the identification information of the keyboard A is obtained in a connection manner with a higher priority within the preset duration in step S1403.

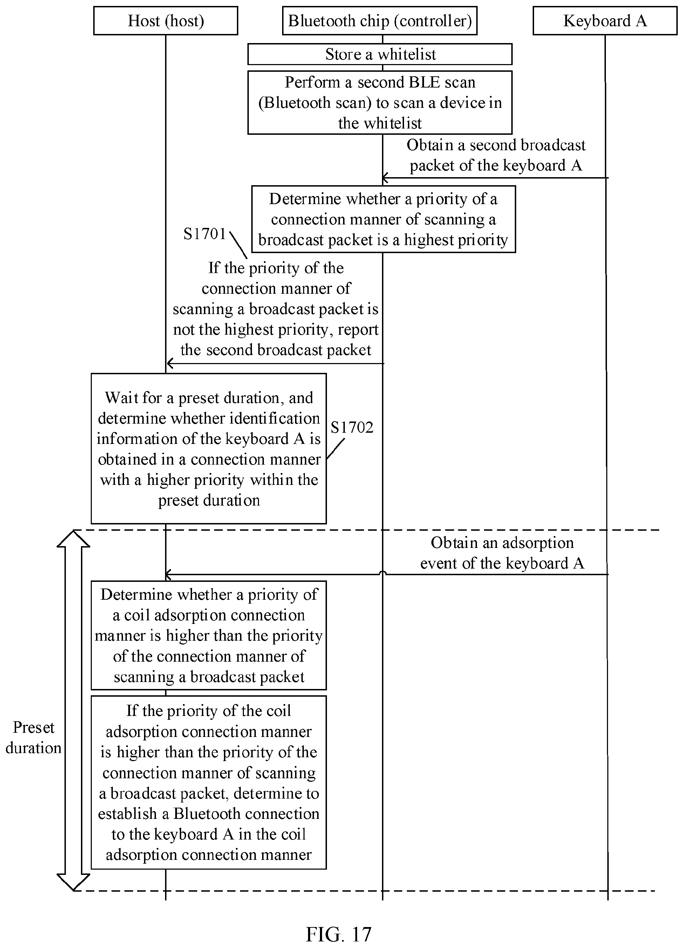

For example, as shown in FIG. 17, after performing step S1402 and determining that the connection manner of scanning a broadcast packet is not a connection manner with a highest priority, the controller reports the second broadcast packet to the host. Specifically, the host is notified that the identification information of the keyboard A is obtained in a connection manner that has a priority that is not the highest priority (shown in S1701 in FIG. 17). After receiving the first BLE broadcast, the host performs S1403, that is, waits for a preset duration, and determines whether the identification information of the keyboard A is obtained in a connection manner with a higher priority within the preset duration (shown in S1702 in FIG. 17).

In some other implementations, in the connection method shown in FIG. 16 and FIG. 17, when the host executes the task of waiting for a preset duration, and determining whether the identification information of the keyboard A is obtained in a connection manner with a higher priority within the preset duration, an instruction for waiting for the preset duration may be set on a controller side based on a specific requirement (for example, if the instruction for waiting for the preset duration is not set in the controller, a Bluetooth connection to the keyboard A is immediately initiated).

### Embodiment 4

In some other implementations, a configuration file may not be stored in a terminal (that is, no priority element is added), but a priority relationship between connection manners is indirectly reflected in code execution.

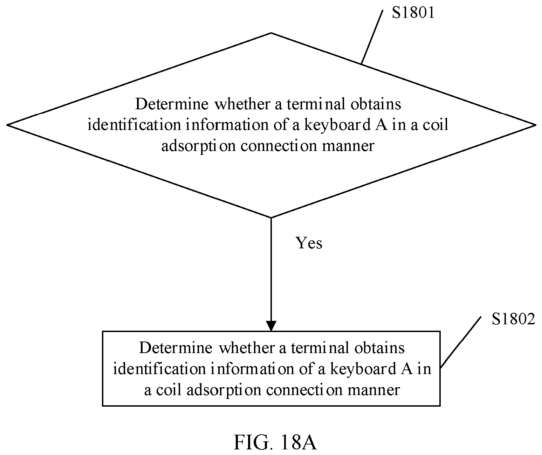

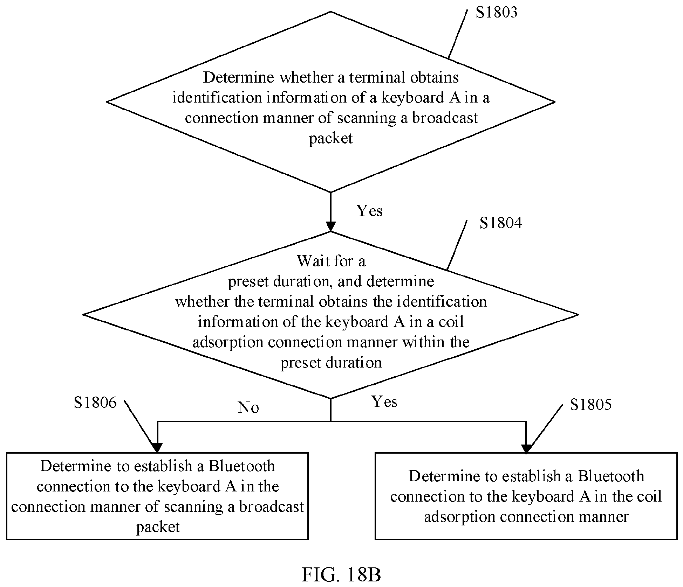

For example, a connection manner between a terminal and a Bluetooth keyboard of a model includes only a coil adsorption connection manner and a connection manner of scanning a broadcast packet, and a priority of the coil adsorption connection manner is higher than a priority of the connection manner of scanning a broadcast packet. When obtaining identification information of a keyboard A in the coil adsorption connection manner, the terminal determines to establish a Bluetooth connection to the keyboard A in the coil adsorption connection manner. When obtaining identification information of a keyboard A in the connection manner of scanning a broadcast packet, the terminal determines whether the terminal obtains the identification information of the keyboard A in the coil adsorption connection manner within a preset duration; and if the terminal obtains the identification information of the keyboard A in the coil adsorption connection manner within the preset duration, determines to establish a Bluetooth connection to the keyboard A in the coil adsorption connection manner; or if the terminal does not obtain the identification information of the keyboard A in the coil adsorption connection manner within the preset duration, determines to establish a Bluetooth connection to the keyboard Ain the connection manner of scanning a broadcast packet. No priority determining needs to be performed, but it is indirectly reflected in code execution to determine, based on the priority relationship between connection manners, whether to directly establish a Bluetooth connection to the Bluetooth device in the current connection manner or wait for the preset duration. As shown in FIG. 18A and FIG. 18B, the connection method provided in this embodiment of this application includes the following steps.

S1801: Determine whether the terminal obtains the identification information of the keyboard A in the coil adsorption connection manner.

S1802: If it is determined that the terminal obtains the identification information of the keyboard A in the coil adsorption connection manner, the terminal determines to establish a Bluetooth connection to the keyboard A in the coil adsorption connection manner.

It may be understood that if the identification information of the keyboard A is obtained in the coil adsorption connection manner, it is immediately determined to establish a Bluetooth connection to the keyboard A in the coil adsorption connection manner. This implicitly indicates that the priority of the coil adsorption connection manner is a highest priority.

S1803: Determine whether the terminal obtains the identification information of the keyboard A in the connection manner of scanning a broadcast packet.

S1804: When it is determined that the terminal obtains the identification information of the keyboard A in the connection manner of scanning a broadcast packet, wait for a preset duration, and determine whether the terminal obtains the identification information of the keyboard A in the coil adsorption connection manner within the preset duration.

It may be understood that if the identification information of the keyboard A is obtained in the connection manner of scanning a broadcast packet, the terminal waits for the preset duration. This implicitly indicates that the priority of the connection manner of scanning a broadcast packet is not a highest priority.

S1805: When determining that the terminal obtains the identification information of the keyboard A in the coil adsorption connection manner within the preset duration, the terminal determines to establish a Bluetooth connection to the keyboard A in the coil adsorption connection manner.

S1806: When determining that the terminal does not obtain the identification information of the keyboard A in the coil adsorption connection manner within the preset duration, the terminal determines to establish a Bluetooth connection to the keyboard A in the connection manner of scanning a broadcast packet.

For detailed descriptions of preset duration, refer to related descriptions in another embodiment of this specification. Details are not described herein.

It may be understood that when it is known that a connection manner and a priority of the connection manner are not changed in a short time, the method shown in FIG. 18A and FIG. 18B may be used. It may be understood that in the method shown in FIG. 18A and FIG. 18B, if a connection manner or a priority of a connection manner is changed, execution code needs to be rewritten.

It may be understood that in some solutions related to FIG. 9, for example, solutions such as obtaining different Bluetooth keyboards of a same model as the keyboard Ain a connection manner with a higher priority within a preset duration, cyclically performing determining of a priority, waiting for a preset duration, and setting a maximum waiting duration are also applicable to the connection methods shown in FIG. 12 to FIG. 18B. For detailed descriptions, refer to the related descriptions in FIG. 9 of this specification. Details are not described herein.

It may be understood that the connection method described in this embodiment of this application may alternatively be understood as a Bluetooth connection method or a wireless communication connection method, and is applicable to a terminal that supports establishment of a connection to a wireless communication device in two or more connection manners. For example, in addition to being applicable to a Bluetooth connection, the idea of the Bluetooth connection method may also be applicable to a wireless communication connection such as a wireless fidelity WiFi connection, a radio frequency identification (Radio Frequency Identification, RFID) connection, a ZigBee (ZigBee) connection, or a mobile communication connection. This is not limited in this specification.

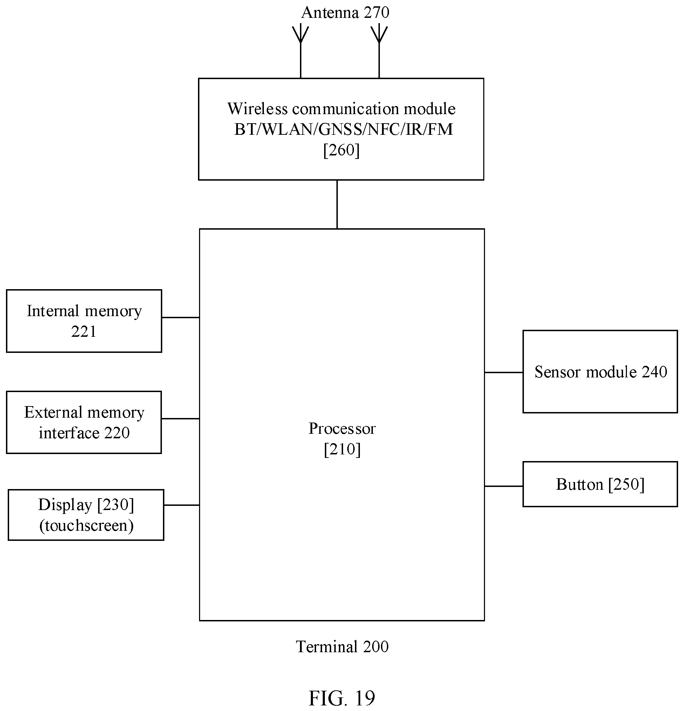

The following describes in detail the embodiment by using an example in which the foregoing terminal is a terminal 200 shown in FIG. 19. It should be understood that the terminal 200 may have more or fewer components than those shown in FIG. 19, may combine two or more components, or may have different component configurations. The components shown in FIG. 19 may be implemented by hardware that includes one or more signal processing and/or applicationspecific integrated circuits, software, or a combination of hardware and software.

The terminal 200 may include a processor 210, an external memory interface 220, an internal memory 221, a display 230, a sensor module 240, a button 250, a wireless communication module 260, an antenna 270, and the like.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

A memory may be disposed in the processor 210, to store instructions and data. In some embodiments, the memory in the processor 210 is a cache. The memory may store instructions or data just used or cyclically used by the processor 210. If the processor 210 needs to use the instructions or the data again, the processor 210 may directly invoke the instructions or the data from the memory. This avoids repeated access and reduces a waiting time of the processor 210, thereby improving system efficiency.

It may be understood that the terminal 200 implements a display function by using the GPU, the display 230, the application processor, and the like. The GPU is a microprocessor for image processing and is connected to the display 230 and the application processor. The GPU is configured to perform mathematical and geometric computing for graphics rendering. The processor 210 may include one or more GPUs that execute program instructions to generate or change displayed information.

The internal memory 221 may be configured to store computer-executable program code. The executable program code includes instructions. The processor 210 performs various function applications and data processing of the terminal 200 by running the instructions stored in the internal memory 221. The internal memory 221 may include a program storage area and a data storage area. The program storage area may store an operating system, an application required by at least one function (for example, a sound playing function or an image playing function), and the like. The data storage area may store data (for example, audio data or a phone book) created in a use process of the terminal 200. In addition, the internal memory 221 may include a high-speed random access memory, and may further include a nonvolatile memory, for example, at least one magnetic disk storage device, a flash memory device, and a universal flash storage (universal flash storage, UFS).

In this embodiment of this application, the terminal may store a configuration file in the internal memory 221.

A wireless communication function of the terminal 200 may be implemented by using the wireless communication module 260, the antenna 270, the modem processor, and the like.

The antenna 270 is configured to transmit and receive an electromagnetic wave signal. Each antenna in the terminal 200 may be configured to cover one or more communication bands. Different antennas may be multiplexed to improve antenna utilization.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transfers the low-frequency baseband signal obtained through demodulation to the baseband processor for processing. The low-frequency baseband signal is processed by the baseband processor and then transferred to the application processor. The application processor outputs a sound signal through an audio device (which is not limited to a speaker, a receiver, and the like), or displays an image or a video through the display 230. In some embodiments, the modem processor may be an independent device. In some other embodiments, the modem processor may be independent of the processor 210, and is disposed in a same device as the mobile communication module or another functional module.

The wireless communication module 260 may provide a wireless communication solution that is applied to the terminal 200 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 260 may be one or more devices integrated with at least one communication processing module. The wireless communication module 260 receives an electromagnetic wave through the antenna 2, performs frequency modulation and filtering processing on an electromagnetic wave signal, and sends a processed signal to the processor 210. The wireless communication module 260 may further receive a to-be-sent signal from the processor 210, perform frequency modulation and amplification on the signal, and convert the signal into an electromagnetic wave through the antenna 2 for radiation.

In this embodiment of this application, a host and a controller in the terminal may be located in the wireless communication module.

The display 230 is configured to display an image, a video, and the like. The display 230 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a Miniled, a MicroLed, a Micro-oLed, a quantum dot light emitting diode (quantum dot light emitting diodes, QLED), or the like. In some embodiments, the terminal 200 may include one or N displays 194, where N is a positive integer greater than 1.

In this embodiment of this application, the terminal may display, by using the display 230, a priority of a connection manner supported by both the terminal and a Bluetooth device of a model.

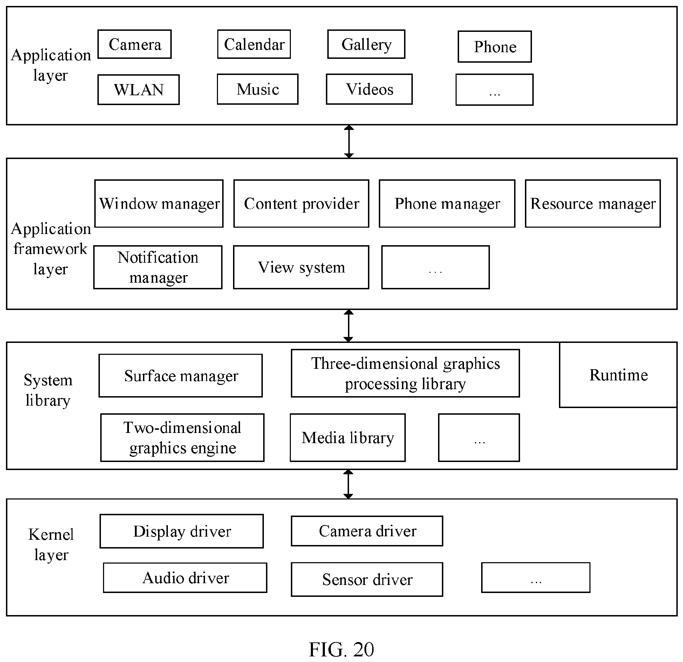

FIG. 20 is a block diagram of a software structure of a terminal 100 according to an embodiment of this application.

In a layered architecture, software is divided into several layers, and each layer has a clear role and task. The layers communicate with each other through a software interface. In some embodiments, a system is divided into four layers: an application layer, an application framework layer, a runtime (Runtime) and system library, and a kernel layer from top to bottom.

The application layer may include a series of application packages.

As shown in FIG. 20, the application packages may include applications (which may also be referred to as applications (application, App)) such as Camera, Gallery, Calendar, Phone, Map, Navigation, WLAN, Bluetooth, Music, Videos, and Messages.

The application framework layer provides an application programming interface (application programming interface, API) and a programming framework for the application at the application layer. The application framework layer includes some predefined functions.

As shown in FIG. 20, the application framework layer may include a window manager, a content provider, a view system, a phone manager, a resource manager, a notification manager, and the like.

The window manager is configured to manage a window program. The content provider is configured to store and obtain data, and enable the data to be accessible to an application. The view system includes visual controls such as a text display control and a picture display control. The view system may be configured to construct an application. The phone manager is configured to provide a communication function of the terminal 100. The resource manager provides various resources for the application, for example, a localized string, an icon, a picture, a layout file, and a video file. The notification manager enables an application to display notification information in a status bar, and may be configured to convey a notification message that may automatically disappear after a short stay without requiring user interaction.

The runtime (Runtime) includes a core library and a virtual machine. The Runtime is responsible for scheduling and managing the system.

The core library includes two parts: a function that needs to be invoked by using a programming language (for example, a jave language), and a core library of the system.

The application layer and the application framework layer may run in the virtual machine. The virtual machine may execute a binary file of a programming file (for example, a jave file) at the application layer and the application framework layer. The virtual machine is configured to perform functions such as lifecycle management of an object, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a two-dimensional graphics engine (for example, SGL).

The kernel layer is a layer between hardware and software. The kernel layer may include a display driver, a camera driver, an audio driver, a sensor driver, a virtual card driver, and the like.

As used in the foregoing embodiments, according to the context, the term "when" may be interpreted as "if", "after", "in response to determining", or "in response to detecting". Similarly, based on the context, the phrase "when determining" or "if detecting (a stated condition or event)" may be interpreted as a meaning of "if determining", "in response to determining", "when detecting (a stated condition or event)", or "in response to detecting (a stated condition or event)".

All or some of the foregoing embodiments may be implemented by using software, hardware, firmware, or any combination thereof. When the software is used for implementation, some or all of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired manner (for example, a coaxial cable, an optical fiber, or a digital subscriber line) or a wireless manner (for example, infrared, wireless, or microwave). The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

Persons of ordinary skill in the art may understand that all or some of the procedures in the methods in the foregoing embodiments may be implemented by using a computer program instructing related hardware. The program may be stored in a computer-readable storage medium. When the program is executed, the procedures in the foregoing method embodiments may be performed. The foregoing storage medium includes any medium that can store program code, for example, a ROM, a random access memory RAM, a magnetic disk, or an optical disc.

## Claims

1. A connection method, applied to a terminal (200), the terminal stores configuration information, a priority corresponding to a Bluetooth connection manner is configured in the configuration information, wherein the method comprises:
discovering a connectable target Bluetooth device;
detecting a Bluetooth connection request between the terminal and the target Bluetooth device, wherein the Bluetooth connection request comprises a preset Bluetooth connection manner;
in response to the Bluetooth connection request, determining, based on the configuration information and the Bluetooth connection manner supported by the terminal, a priority of a Bluetooth connection manner supported by both the terminal and the target Bluetooth device;
determining whether a priority corresponding to the preset Bluetooth connection manner is a highest priority in the priority of the Bluetooth connection manner supported by both the terminal and the target Bluetooth device;
when determining that the priority corresponding to the preset Bluetooth connection manner is the highest priority, determining to use the preset Bluetooth connection manner as the target Bluetooth connection manner; and
establishing a Bluetooth connection to the target Bluetooth device in the target Bluetooth connection manner, wherein either:
that a priority corresponding to a Bluetooth connection manner is configured in the configuration information comprises: a Bluetooth connection manner correspondingly supported by each Bluetooth device and a priority corresponding to the Bluetooth connection manner are configured in the configuration information, wherein each Bluetooth device comprises one or more Bluetooth devices supported by the terminal; and
the determining, based on the configuration information and the Bluetooth connection manner supported by the terminal, a priority of a Bluetooth connection manner supported by both the terminal and the target Bluetooth device comprises:
determining, based on the Bluetooth connection manner that is correspondingly supported by each Bluetooth device and that is configured in the configuration information and the Bluetooth connection manner supported by the terminal, the Bluetooth connection manner supported by both the terminal and the target Bluetooth device; and
determining, based on the priority that corresponds to the Bluetooth connection manner and that is configured in the configuration information, the priority of the Bluetooth connection manner supported by both the terminal and the target Bluetooth device; or:
that a priority corresponding to a Bluetooth connection manner is configured in the configuration information comprises: a priority corresponding to a Bluetooth connection manner supported by both a Bluetooth device corresponding to a model identifier and the terminal is configured in the configuration information, wherein the Bluetooth device corresponding to the model identifier is a Bluetooth device of any Bluetooth model supported by the terminal; and
the determining, based on the configuration information and the Bluetooth connection manner supported by the terminal, a priority of a Bluetooth connection manner supported by both the terminal and the target Bluetooth device comprises:
determining, based on the configuration information, a priority corresponding to a Bluetooth connection manner supported by both a Bluetooth device corresponding to a model identifier of the target Bluetooth device and the terminal; and
wherein the method is **characterized in that** it further comprises:
when determining that the priority corresponding to the preset Bluetooth connection manner is not the highest priority, and another Bluetooth connection request between the terminal and the target Bluetooth device is not detected within a preset time, determining that the preset Bluetooth connection manner is the target Bluetooth connection manner, wherein a priority corresponding to a Bluetooth connection manner comprised in the another Bluetooth connection request is higher than the priority corresponding to the preset Bluetooth connection manner; or
determining, when determining that the priority corresponding to the preset Bluetooth connection manner is not the highest priority, and the another Bluetooth connection request is detected within a preset time, not to use the preset Bluetooth connection manner as the target Bluetooth connection manner.

2. The method according to claim 1, wherein the determining, when determining that the priority corresponding to the preset Bluetooth connection manner is not the highest priority, and the another Bluetooth connection request is detected within a preset time, that the target Bluetooth connection manner is not the preset Bluetooth connection manner comprises:
when determining that the priority corresponding to the preset Bluetooth connection manner is not the highest priority, and the another Bluetooth connection request is detected within the preset time, determining to use a Bluetooth connection manner comprised in the another Bluetooth connection request as the target Bluetooth connection manner.

3. The method according to claim 1, wherein the determining, when determining that the priority corresponding to the preset Bluetooth connection manner is not the highest priority, and the another Bluetooth connection request is detected within a preset time, that the target Bluetooth connection manner is not the preset Bluetooth connection manner comprises:
when determining that the priority corresponding to the preset Bluetooth connection manner is not the highest priority, and one or more other Bluetooth connection requests are detected within the preset time, determining that a Bluetooth connection manner corresponding to a highest priority in one or more Bluetooth connection manners comprised in the one or more other Bluetooth connection requests is used as the target Bluetooth connection manner.

4. The method according to any preceding claim, wherein the method further comprises:
receiving updated configuration information sent by a cloud; and
updating the configuration information to the updated configuration information.

5. A connection method, applied to a terminal (200), wherein the Bluetooth connection request comprises a preset Bluetooth connection manner, the terminal stores configuration information, a priority corresponding to each Bluetooth connection manner supported by the terminal is configured in the configuration information, wherein the method comprises:
discovering a connectable target Bluetooth device;
detecting a Bluetooth connection request between the terminal and the target Bluetooth device, wherein the Bluetooth connection request comprises a preset Bluetooth connection manner;
in response to the Bluetooth connection request, determining a priority corresponding to the preset Bluetooth connection manner based on the priority that corresponds to each Bluetooth connection manner supported by the terminal and that is configured in the configuration information;
determining whether the priority corresponding to the preset Bluetooth connection manner is a highest priority in the configuration information; and
when the priority corresponding to the preset Bluetooth connection manner is the highest priority, determining to use the preset Bluetooth connection manner as the target Bluetooth connection manner; and
establishing a Bluetooth connection to the target Bluetooth device in the target Bluetooth connection manner,
wherein the method is **characterized in that** it further comprises:
when the priority corresponding to the preset Bluetooth connection manner is not the highest priority, and another Bluetooth connection request between the terminal and the target Bluetooth device is not detected within a preset time, determining to use the preset Bluetooth connection manner as the target Bluetooth connection manner, wherein a priority corresponding to a Bluetooth connection manner comprised in the another Bluetooth connection request is higher than the priority corresponding to the preset Bluetooth connection manner; or
determining, when the priority corresponding to the preset Bluetooth connection manner is not the highest priority, and the another Bluetooth connection request is detected within a preset time, that the preset Bluetooth connection manner is not the target Bluetooth connection manner.

6. The method according to claim 5, wherein the determining, when the priority corresponding to the preset Bluetooth connection manner is not the highest priority, and the another Bluetooth connection request is detected within a preset time, that the preset Bluetooth connection manner is not the target Bluetooth connection manner comprises:
when determining that the priority corresponding to the preset Bluetooth connection manner is not the highest priority, and one or more Bluetooth connection requests are detected within the preset time, determining that a Bluetooth connection manner corresponding to a highest priority in one or more Bluetooth connection manners comprised in the one or more Bluetooth connection requests is used as the target Bluetooth connection manner.

7. The method according to claim 5 or claim 6, wherein the method further comprises:
receiving updated configuration information sent by a cloud; and
updating the configuration information to the updated configuration information.

8. An electronic device (200), wherein the electronic device comprises one or more processors (210), a memory (221), and a display (230); and
the memory is coupled to the one or more processors, the memory is configured to store computer program code, the computer program code comprises computer instructions, and the one or more processors invoke the computer instructions to enable the electronic device to perform the method according to any one of claims 1 to 7.

## Patentansprüche

1. Ein Verbindungsverfahren, angewendet auf ein Endgerät (200), wobei das Endgerät Konfigurationsinformationen speichert, eine Priorität, die einer Bluetooth-Verbindungsart entspricht, ist in den Konfigurationsinformationen konfiguriert, wobei das Verfahren Folgendes umfasst:
Erkennen eines verbindbaren Ziel-Bluetooth-Geräts;
Erkennen einer Bluetooth-Verbindungsanfrage zwischen dem Endgerät und dem Ziel-Bluetooth-Gerät, wobei die Bluetooth-Verbindungsanfrage eine voreingestellte Bluetooth-Verbindungsart umfasst;
Als Reaktion auf die Bluetooth-Verbindungsanfrage die Priorität einer Bluetooth-Verbindungsart bestimmen, die sowohl vom Endgerät als auch vom Ziel-Bluetooth-Gerät auf Basis der Konfigurationsinformationen und der vom Endgerät unterstützten Bluetooth-Verbindungsart unterstützt wird;
Bestimmen, ob die einer voreingestellten Bluetooth-Verbindungsart entsprechende Priorität die höchste Priorität unter den von beiden, dem Endgerät und dem Ziel-Bluetooth-Gerät unterstützten Bluetooth-Verbindungsarten ist;
Wenn festgestellt wird, dass die einer voreingestellten Bluetooth-Verbindungsart entsprechende Priorität die höchste Priorität ist, wird die voreingestellte Bluetooth-Verbindungsart als Ziel-Bluetooth-Verbindungsart festgelegt; und
Herstellen einer Bluetooth-Verbindung mit dem Ziel-Bluetooth-Gerät in der Ziel-Bluetooth-Verbindungsart, wobei entweder:
Dass eine Priorität, die einer Bluetooth-Verbindungsart entspricht, in den Konfigurationsinformationen konfiguriert ist, umfasst: Eine Bluetooth-Verbindungsart, die jeweils von jedem Bluetooth-Gerät unterstützt wird, sowie eine entsprechende Priorität für die Bluetooth-Verbindungsart sind in den Konfigurationsinformationen konfiguriert, wobei jedes Bluetooth-Gerät ein oder mehrere vom Endgerät unterstützte Bluetooth-Geräte umfasst; und
Das Bestimmen der Priorität einer Bluetooth-Verbindungsart, die sowohl vom Endgerät als auch vom Ziel-Bluetooth-Gerät auf Grundlage der Konfigurationsinformationen und der vom Endgerät unterstützten Bluetooth-Verbindungsart unterstützt wird, umfasst:
Bestimmen, auf Grundlage der Bluetooth-Verbindungsart, die jeweils von jedem Bluetooth-Gerät unterstützt und in den Konfigurationsinformationen konfiguriert ist, sowie der vom Endgerät unterstützten Bluetooth-Verbindungsart, welche Bluetooth-Verbindungsart sowohl vom Endgerät als auch vom Ziel-Bluetooth-Gerät unterstützt wird; und
Bestimmen, auf Grundlage der Priorität, die der Bluetooth-Verbindungsart entspricht und die in den Konfigurationsinformationen konfiguriert ist, die Priorität der Bluetooth-Verbindungsart, die sowohl vom Endgerät als auch vom Ziel-Bluetooth-Gerät unterstützt wird; oder:
dass eine Priorität, die einer Bluetooth-Verbindungsart entspricht, in den Konfigurationsinformationen festgelegt ist, umfasst: Eine Priorität, die einer von sowohl einem Bluetooth-Gerät entsprechend einer Modellkennung als auch dem Endgerät unterstützten Bluetooth-Verbindungsart zugeordnet ist, wird in den Konfigurationsinformationen festgelegt, wobei das Bluetooth-Gerät, das der Modellkennung entspricht, ein Bluetooth-Gerät eines beliebigen vom Endgerät unterstützten Bluetooth-Modells ist; und
das Bestimmen, basierend auf den Konfigurationsinformationen und der vom Endgerät unterstützten Bluetooth-Verbindungsart, einer Priorität einer sowohl vom Endgerät als auch vom Ziel-Bluetooth-Gerät unterstützten Bluetooth-Verbindungsart umfasst:
das Bestimmen, basierend auf den Konfigurationsinformationen, einer Priorität, die einer sowohl von einem Bluetooth-Gerät, das einer Modellkennung des Ziel-Bluetooth-Geräts entspricht, als auch vom Endgerät unterstützten Bluetooth-Verbindungsart zugeordnet ist; und
wobei das Verfahren **dadurch gekennzeichnet ist, dass** es ferner umfasst:
wenn festgestellt wird, dass die der voreingestellten Bluetooth-Verbindungsart zugeordnete Priorität nicht die höchste Priorität ist und innerhalb einer voreingestellten Zeit keine weitere Bluetooth-Verbindungsanforderung zwischen dem Endgerät und dem Ziel-Bluetooth-Gerät erkannt wird, wird bestimmt, dass die voreingestellte Bluetooth-Verbindungsart die Ziel-Bluetooth-Verbindungsart ist, wobei eine Priorität, die einer in der weiteren Bluetooth-Verbindungsanforderung enthaltenen Bluetooth-Verbindungsart entspricht, höher ist als die Priorität, die der voreingestellten Bluetooth-Verbindungsart entspricht; oder
wird, wenn festgestellt wird, dass die der voreingestellten Bluetooth-Verbindungsart zugeordnete Priorität nicht die höchste Priorität ist und die weitere Bluetooth-Verbindungsanforderung innerhalb einer voreingestellten Zeit erkannt wird, bestimmt, die voreingestellte Bluetooth-Verbindungsart nicht als Ziel-Bluetooth-Verbindungsart zu verwenden.

2. Verfahren nach Anspruch 1, wobei das Bestimmen, wenn festgestellt wird, dass die der voreingestellten Bluetooth-Verbindungsart zugeordnete Priorität nicht die höchste Priorität ist und die weitere Bluetooth-Verbindungsanforderung innerhalb einer voreingestellten Zeit erkannt wird, dass die Ziel-Bluetooth-Verbindungsart nicht die voreingestellte Bluetooth-Verbindungsart ist, umfasst:
wenn festgestellt wird, dass die der voreingestellten Bluetooth-Verbindungsart zugeordnete Priorität nicht die höchste Priorität ist und die weitere Bluetooth-Verbindungsanforderung innerhalb der voreingestellten Zeit erkannt wird, wird bestimmt, eine in der weiteren Bluetooth-Verbindungsanforderung enthaltene Bluetooth-Verbindungsart als Ziel-Bluetooth-Verbindungsart zu verwenden.

3. Verfahren nach Anspruch 1, wobei das Bestimmen, wenn bestimmt wird, dass die Priorität, die der voreingestellten Bluetooth-Verbindungsart entspricht, nicht die höchste Priorität ist, und innerhalb einer voreingestellten Zeit eine weitere Bluetooth-Verbindungsanfrage erkannt wird, dass die Ziel-Bluetooth-Verbindungsart nicht die voreingestellte Bluetooth-Verbindungsart ist, Folgendes umfasst:
wenn bestimmt wird, dass die Priorität, die der voreingestellten Bluetooth-Verbindungsart entspricht, nicht die höchste Priorität ist und innerhalb der voreingestellten Zeit eine oder mehrere weitere Bluetooth-Verbindungsanfragen erkannt werden, wird ermittelt, dass eine Bluetooth-Verbindungsart, die der höchsten Priorität unter den in den weiteren Bluetooth-Verbindungsanfragen enthaltenen Bluetooth-Verbindungsarten entspricht, als Ziel-Bluetooth-Verbindungsart verwendet wird.

4. Verfahren nach einem der vorhergehenden Ansprüche, wobei das Verfahren ferner Folgendes umfasst:
Empfangen von aktualisierten Konfigurationsinformationen, die von einer Cloud gesendet werden; und
Aktualisieren der Konfigurationsinformationen auf die aktualisierten Konfigurationsinformationen.

5. Verbindungsverfahren, angewendet auf ein Terminal (200), wobei die Bluetooth-Verbindungsanfrage eine voreingestellte Bluetooth-Verbindungsart umfasst, das Terminal Konfigurationsinformationen speichert und in den Konfigurationsinformationen die Priorität zu jeder vom Terminal unterstützten Bluetooth-Verbindungsart konfiguriert ist, wobei das Verfahren Folgendes umfasst:
Aufspüren eines verbindbaren Ziel-Bluetooth-Geräts;
Erkennen einer Bluetooth-Verbindungsanfrage zwischen dem Terminal und dem Ziel-Bluetooth-Gerät, wobei die Bluetooth-Verbindungsanfrage eine voreingestellte Bluetooth-Verbindungsart umfasst;
Als Reaktion auf die Bluetooth-Verbindungsanfrage wird eine Priorität ermittelt, die der voreingestellten Bluetooth-Verbindungsart entspricht, basierend auf der Priorität, die jeder vom Terminal unterstützten und in den Konfigurationsinformationen konfigurierten Bluetooth-Verbindungsart entspricht;
Bestimmen, ob die Priorität, die der voreingestellten Bluetooth-Verbindungsart entspricht, die höchste Priorität in den Konfigurationsinformationen ist; und
wenn die Priorität, die der voreingestellten Bluetooth-Verbindungsart entspricht, die höchste Priorität ist, Bestimmen, die voreingestellte Bluetooth-Verbindungsart als Ziel-Bluetooth-Verbindungsart zu verwenden; und
Aufbauen einer Bluetooth-Verbindung zum Ziel-Bluetooth-Gerät unter Verwendung der Ziel-Bluetooth-Verbindungsart,
wobei das Verfahren **dadurch gekennzeichnet ist, dass** es ferner Folgendes umfasst:
wenn die Priorität, die der voreingestellten Bluetooth-Verbindungsart entspricht, nicht die höchste Priorität ist und innerhalb einer vorgegebenen Zeit kein weiteres Bluetooth-Verbindungsersuchen zwischen dem Endgerät und dem Ziel-Bluetooth-Gerät erkannt wird, wird bestimmt, dass die voreingestellte Bluetooth-Verbindungsart als die Ziel-Bluetooth-Verbindungsart verwendet wird, wobei eine Priorität, die einer in dem weiteren Bluetooth-Verbindungsersuchen enthaltenen Bluetooth-Verbindungsart entspricht, höher ist als die Priorität der voreingestellten Bluetooth-Verbindungsart; oder
es wird bestimmt, dass, wenn die Priorität der voreingestellten Bluetooth-Verbindungsart nicht die höchste Priorität ist und das weitere Bluetooth-Verbindungsersuchen innerhalb einer vorgegebenen Zeit erkannt wird, die voreingestellte Bluetooth-Verbindungsart nicht die Ziel-Bluetooth-Verbindungsart ist.

6. Verfahren nach Anspruch 5, wobei das Bestimmen, dass die voreingestellte Bluetooth-Verbindungsart nicht die Ziel-Bluetooth-Verbindungsart ist, wenn die Priorität, die der voreingestellten Bluetooth-Verbindungsart entspricht, nicht die höchste Priorität ist und das weitere Bluetooth-Verbindungsersuchen innerhalb einer vorgegebenen Zeit erkannt wird, Folgendes umfasst:
wenn festgestellt wird, dass die Priorität, die der voreingestellten Bluetooth-Verbindungsart entspricht, nicht die höchste Priorität ist und ein oder mehrere Bluetooth-Verbindungsersuchen innerhalb der vorgegebenen Zeit erkannt werden, wird bestimmt, dass eine Bluetooth-Verbindungsart, die der höchsten Priorität unter den in einem oder mehreren Bluetooth-Verbindungsersuchen enthaltenen Bluetooth-Verbindungsarten entspricht, als Ziel-Bluetooth-Verbindungsart verwendet wird.

7. Verfahren nach Anspruch 5 oder Anspruch 6, wobei das Verfahren weiterhin Folgendes umfasst:
Empfangen von aktualisierten Konfigurationsinformationen, die von einer Cloud gesendet werden; und
Aktualisieren der Konfigurationsinformationen zu den aktualisierten Konfigurationsinformationen.

8. Elektronisches Gerät (200), wobei das elektronische Gerät einen oder mehrere Prozessoren (210), einen Speicher (221) und eine Anzeige (230) umfasst; und
der Speicher ist mit dem einen oder den mehreren Prozessoren gekoppelt, der Speicher ist dazu konfiguriert, Computerprogrammcode zu speichern, der Computerprogrammcode umfasst Computeranweisungen, und der oder die Prozessoren rufen die Computeranweisungen auf, um das elektronische Gerät in die Lage zu versetzen, das Verfahren nach einem der Ansprüche 1 bis 7 auszuführen.

## Revendications

1. Procédé de connexion, appliqué à un terminal (200), le terminal stockant des informations de configuration, une priorité correspondant à un mode de connexion Bluetooth étant configurée dans les informations de configuration, le procédé comprenant :
découvrir un dispositif Bluetooth cible pouvant être connecté ;
détecter une demande de connexion Bluetooth entre le terminal et le dispositif Bluetooth cible, la demande de connexion Bluetooth comprenant un mode de connexion Bluetooth prédéfini ;
en réponse à la demande de connexion Bluetooth, déterminer, sur la base des informations de configuration et du mode de connexion Bluetooth pris en charge par le terminal, une priorité d'un mode de connexion Bluetooth pris en charge à la fois par le terminal et par le dispositif Bluetooth cible ;
déterminer si la priorité correspondant au mode de connexion Bluetooth prédéfini est la priorité la plus élevée parmi les modes de connexion Bluetooth pris en charge à la fois par le terminal et par le dispositif Bluetooth cible ;
lorsqu'il est déterminé que la priorité correspondant au mode de connexion Bluetooth prédéfini est la plus élevée, décider d'utiliser le mode de connexion Bluetooth prédéfini comme mode de connexion Bluetooth cible ; et
établir une connexion Bluetooth avec le dispositif Bluetooth cible selon le mode de connexion Bluetooth cible, où :
le fait qu'une priorité correspondant à un mode de connexion Bluetooth soit configurée dans les informations de configuration comprend : un mode de connexion Bluetooth correspondant pris en charge par chaque dispositif Bluetooth et une priorité correspondant au mode de connexion Bluetooth sont configurés dans les informations de configuration, chaque dispositif Bluetooth comprenant un ou plusieurs dispositifs Bluetooth pris en charge par le terminal ; et
la détermination, sur la base des informations de configuration et du mode de connexion Bluetooth pris en charge par le terminal, d'une priorité d'un mode de connexion Bluetooth pris en charge à la fois par le terminal et par le dispositif Bluetooth cible comprend :
déterminer, sur la base du mode de connexion Bluetooth correspondant pris en charge par chaque dispositif Bluetooth et configuré dans les informations de configuration, et du mode de connexion Bluetooth pris en charge par le terminal, le mode de connexion Bluetooth pris en charge à la fois par le terminal et par le dispositif Bluetooth cible ; et
déterminer, sur la base de la priorité correspondant au mode de connexion Bluetooth configurée dans les informations de configuration, la priorité du mode de connexion Bluetooth pris en charge à la fois par le terminal et par le dispositif Bluetooth cible ; ou :
qu'une priorité correspondant à un mode de connexion Bluetooth soit configurée dans les informations de configuration, comprenant : une priorité correspondant à un mode de connexion Bluetooth pris en charge à la fois par un dispositif Bluetooth correspondant à un identifiant de modèle et par le terminal, qui est configurée dans les informations de configuration, le dispositif Bluetooth correspondant à l'identifiant de modèle étant un dispositif Bluetooth de n'importe quel modèle Bluetooth pris en charge par le terminal ; et
la détermination, sur la base des informations de configuration et du mode de connexion Bluetooth pris en charge par le terminal, d'une priorité d'un mode de connexion Bluetooth pris en charge à la fois par le terminal et le dispositif Bluetooth cible comprend :
déterminer, sur la base des informations de configuration, une priorité correspondant à un mode de connexion Bluetooth pris en charge à la fois par un dispositif Bluetooth correspondant à un identifiant de modèle du dispositif Bluetooth cible et par le terminal ; et
le procédé est **caractérisé en ce qu'**il comprend en outre :
lorsqu'il est déterminé que la priorité correspondant au mode de connexion Bluetooth prédéfini n'est pas la priorité la plus élevée, et qu'aucune autre demande de connexion Bluetooth entre le terminal et le dispositif Bluetooth cible n'est détectée dans un délai prédéfini, déterminer que le mode de connexion Bluetooth prédéfini est le mode de connexion Bluetooth cible, la priorité correspondant à un mode de connexion Bluetooth inclus dans l'autre demande de connexion Bluetooth étant supérieure à la priorité correspondant au mode de connexion Bluetooth prédéfini ; ou
déterminer, lorsqu'il est déterminé que la priorité correspondant au mode de connexion Bluetooth prédéfini n'est pas la plus élevée et que l'autre demande de connexion Bluetooth est détectée dans un délai prédéfini, de ne pas utiliser le mode de connexion Bluetooth prédéfini comme mode de connexion Bluetooth cible.

2. Procédé selon la revendication 1, dans lequel la détermination, lorsqu'il est déterminé que la priorité correspondant au mode de connexion Bluetooth prédéfini n'est pas la plus élevée et que l'autre demande de connexion Bluetooth est détectée dans un délai prédéfini, que le mode de connexion Bluetooth cible n'est pas le mode de connexion Bluetooth prédéfini comprend :
lorsqu'il est déterminé que la priorité correspondant au mode de connexion Bluetooth prédéfini n'est pas la plus élevée et que l'autre demande de connexion Bluetooth est détectée dans le délai prédéfini, déterminer d'utiliser un mode de connexion Bluetooth inclus dans l'autre demande de connexion Bluetooth comme mode de connexion Bluetooth cible.

3. Procédé selon la revendication 1, dans lequel la détermination, lorsqu'il est déterminé que la priorité correspondant au mode de connexion Bluetooth prédéfini n'est pas la priorité la plus élevée, et qu'une autre demande de connexion Bluetooth est détectée dans un délai prédéfini, selon laquelle le mode de connexion Bluetooth cible n'est pas le mode de connexion Bluetooth prédéfini, comprend :
lorsqu'il est déterminé que la priorité correspondant au mode de connexion Bluetooth prédéfini n'est pas la priorité la plus élevée et qu'une ou plusieurs autres demandes de connexion Bluetooth sont détectées dans le délai prédéfini, il est déterminé qu'un mode de connexion Bluetooth correspondant à la priorité la plus élevée parmi un ou plusieurs modes de connexion Bluetooth inclus dans ces autres demandes de connexion Bluetooth est utilisé comme mode de connexion Bluetooth cible.

4. Procédé selon l'une quelconque des revendications précédentes, dans lequel le procédé comprend en outre :
recevoir des informations de configuration mises à jour envoyées par un cloud ; et
mettre à jour les informations de configuration avec les informations de configuration mises à jour.

5. Procédé de connexion, appliqué à un terminal (200), dans lequel la demande de connexion Bluetooth comprend un mode de connexion Bluetooth prédéfini, le terminal stocke des informations de configuration, une priorité correspondant à chaque mode de connexion Bluetooth pris en charge par le terminal étant configurée dans les informations de configuration, le procédé comprenant :
découvrir un dispositif Bluetooth cible pouvant être connecté ;
détecter une demande de connexion Bluetooth entre le terminal et le dispositif Bluetooth cible, la demande de connexion Bluetooth comprenant un mode de connexion Bluetooth prédéfini ;
en réponse à la demande de connexion Bluetooth, déterminer une priorité correspondant au mode de connexion Bluetooth prédéfini sur la base de la priorité correspondant à chaque mode de connexion Bluetooth pris en charge par le terminal et configurée dans les informations de configuration ;
déterminer si la priorité correspondant au mode de connexion Bluetooth prédéfini est la priorité la plus élevée dans les informations de configuration ; et
lorsque la priorité correspondant au mode de connexion Bluetooth prédéfini est la plus élevée, déterminer d'utiliser le mode de connexion Bluetooth prédéfini en tant que mode de connexion Bluetooth cible ; et
établir une connexion Bluetooth avec le dispositif Bluetooth cible selon le mode de connexion Bluetooth cible,
le procédé étant **caractérisé en ce qu'**il comprend en outre :
lorsque la priorité associée au mode de connexion Bluetooth prédéfini n'est pas la plus élevée, et qu'aucune autre demande de connexion Bluetooth entre le terminal et l'appareil Bluetooth cible n'est détectée dans un délai prédéfini, il est déterminé d'utiliser le mode de connexion Bluetooth prédéfini comme mode de connexion Bluetooth cible, une priorité associée à un mode de connexion Bluetooth inclus dans l'autre demande de connexion Bluetooth étant supérieure à la priorité associée au mode de connexion Bluetooth prédéfini ; ou
déterminer, lorsque la priorité associée au mode de connexion Bluetooth prédéfini n'est pas la plus élevée et qu'une autre demande de connexion Bluetooth est détectée dans un délai prédéfini, que le mode de connexion Bluetooth prédéfini n'est pas le mode de connexion Bluetooth cible.

6. Le procédé selon la revendication 5, dans lequel la détermination, lorsque la priorité associée au mode de connexion Bluetooth prédéfini n'est pas la plus élevée et qu'une autre demande de connexion Bluetooth est détectée dans un délai prédéfini, que le mode de connexion Bluetooth prédéfini n'est pas le mode de connexion Bluetooth cible, comprend :
lorsqu'il est déterminé que la priorité associée au mode de connexion Bluetooth prédéfini n'est pas la plus élevée, et qu'une ou plusieurs demandes de connexion Bluetooth sont détectées dans le délai prédéfini, il est déterminé qu'un mode de connexion Bluetooth correspondant à la priorité la plus élevée parmi les modes de connexion Bluetooth inclus dans ces demandes de connexion Bluetooth est utilisé comme mode de connexion Bluetooth cible.

7. Le procédé selon la revendication 5 ou 6, dans lequel le procédé comprend en outre :
recevoir des informations de configuration mises à jour envoyées par un cloud ; et
mettre à jour les informations de configuration avec les informations de configuration mises à jour.

8. Un dispositif électronique (200), dans lequel le dispositif électronique comprend un ou plusieurs processeurs (210), une mémoire (221) et un écran (230) ; et
la mémoire est couplée au(x) processeur(s), la mémoire est conçue pour stocker un code de programme informatique, le code de programme informatique comprend des instructions informatiques, et le(s) processeur(s) invoquent ces instructions afin de permettre au dispositif électronique d'exécuter le procédé selon l'une quelconque des revendications 1 à 7.
